(19) Europäisches Patentamt
European Patent Office
Office européen des brevets

(11) EP 0 561 078 B1

(12) **EUROPEAN PATENT SPECIFICATION**

(45) Date of publication and mention
of the grant of the patent:
**23.04.1997   Bulletin 1997/17**

(51) Int Cl.$^6$: **C08F 2/00**

(21) Application number: **92309771.1**

(22) Date of filing: **26.10.1992**

(54) **Process for control of molecular weight distribution in polymers**

Verfahren zur Steuerung der Molekulargewichtsverteilung in Polymeren

Procédé de contrôle de la répartition du poids moléculaire dans des polymères

(84) Designated Contracting States:
**AT BE CH DE DK ES FR GB GR IE IT LI LU MC NL
PT SE**

(30) Priority: **25.09.1992   US 948667
04.09.1992   US 940571
07.07.1992   US 909931
20.03.1992   US 854924**

(43) Date of publication of application:
**22.09.1993   Bulletin 1993/38**

(73) Proprietor: **ROHM AND HAAS COMPANY
Philadelphia Pennsylvania 19105 (US)**

(72) Inventors:
• **Shervin, Carl Rande
Warrington, Pennsylvania 18976 (US)**
• **Wetterwald, Philippe Paul Robert
F-60400 Noyon (FR)**

(74) Representative: **Tanner, James Percival et al
ROHM AND HAAS (UK) LTD.
European Operations Patent Department
Lennig House
2 Mason's Avenue
Croydon CR9 3NB (GB)**

(56) References cited:
**EP-A- 0 176 611          FR-A- 2 606 774**

**Description**

The present invention is concerned with polymerization processes for producing polymers with narrow molecular weight distributions based on controlling the degree of polymerization during the polymerization. This is achieved by using the relationship between the degree of polymerization and free-radical polymerization kinetics parameters and controlling the concentration of initiator relative to monomer as a function of time. This process may be used in a semi-batch or semi-continuous mode, particularly for producing acrylate and methacrylate copolymers.

Some approaches to providing narrow molecular weight distributions are: anionic polymerization; continuous-feed-stirred-tank-reactor (CFSTR) technology; low-conversion polymerization; in-process control of monomer, initiator or solvent concentrations; mechanical shearing of the polymer, e.g., homogenization, and the like. Many of these methods require special equipment, have limited application to specific monomers or are not useful for polymerizations requiring high monomer conversion.

Molecular weight distribution (hereinafter referred to as MWD) control can be achieved by a variety of methods, one of which is based on the application of differential monomer and initiator material balances to basic free radical polymerization kinetics. Hoffman *et al. (Industrial and Engineering Chemistry,* **56**, 51-57, 1964) studied polymerizations using continuous feeds of either initiator or monomer based on mathematical equations derived from polymerization kinetics to calculate the monomer or initiator feed rates; this approach was useful for producing narrow MWD polymers at monomer conversions up to about 50%. Chen *et al.* (*Chemical Engineering Science,* **36**, 1295-1305, 1981) studied minimum polymerization times for styrene in toluene to achieve a specified MWD by using a calculated initiator feed rate derived from mathematical equations for polymerization kinetics; agreement between theoretical and actual results was good for monomer conversions of 40 to 70%.

Louie *et al.* (*J. Applied Polymer Science,* **30**, 3707-3749, 1985) developed a strategy for producing narrow MWD poly(methyl methacrylate) at high monomer conversions using kinetic models based on photoinitiation or programmed solvent addition. Thomas *et al. (Can. J. Chem. Eng.,* **62**, 284-291, 1984) developed a strategy for varying MWDs of poly(methyl methacrylate) by using optimal temperature and initiator addition methods for monomer conversions up to 90%.

Tsoukas *et al. (Chem. Eng. Science,* **37**, 1785-1795, 1982) studied styreneacrylonitrile copolymerizations using variable initiator and monomer addition methods based on homogeneous solution and low conversion bulk free radical polymerization kinetic models to control the breadth of copolymer composition distribution and MWD.

EP-A-0 176 611 discloses a method for the polymerization of anionically polymerizable monomer with an organo-metallic anionic initiator in a continuous stirred tank reactor wherein the contents of the reactor are generally homogeneous and the polymerization components are continuously added and the reaction mixture continuously discharged from the reactor at essentially the same rate, further characterized by: means for controlling the flow of the monomer and the initiator feed streams to the reactor and a means for measuring the molecular weight of the polymer in the reactor discharge stream to obtain a signal which controls the rate of initiator addition to the reactor to provide a polymer of essentially constant molecular weight.

US-A-5,126,415 (corresponding to FR-A-2606774) discloses a process for preparing polymers with polydispersibility optionally approaching the theoretical polydispersibility and substituted by functional groups in $\alpha,\omega$-positions, via radical polymerization of radically polymerizable monomers, using one or more initiators. In the process the polymerization degree is maintained at the desired value by continuous elevation of the temperature.

Conventional free-radical polymerization processes tend to produce increasingly broad MWDs as the polymerization proceeds due to changes in the relative concentrations of monomer and initiator. The present invention enables this broadening effect to be overcome by providing a means for maintaining an approximately constant degree of polymerization during the polymerization.

The present invention involves a polymerization process comprising addition of a monomer and an initiator to a reaction vessel under polymerization conditions wherein the initiator and monomer are each added at rates such that an approximately constant degree of polymerization is maintained during the polymerization.

The present invention allows for an approximate constant degree of polymerization to be maintained even under conditions which cause the polymerization kinetics to deviate from ideality. Those conditions are practically provided for by incorporating a polymerization efficiency factor into the kinetic model of the polymerization. Consequently, the present invention not only provides a means for achieving an approximately constant degree of polymerization resulting in achievement of a narrow molecular weight distribution of the polymer, it also recognizes the need to accommodate factors which affect conventional polymerization kinetics during the polymerization and describes how to accommodate such factors.

According to the present invention there is provided a polymerization process, which comprises adding monomer and initiator to a reaction vessel under polymerization conditions using a monomer feed profile and an initiator feed profile, wherein: one of the feed profiles is preselected; the feed profiles are such that the ratio of monomer concentration to initiator concentration is determined in accordance with a polymerization kinetics relationship between a selected degree of polymerization for the polymer and monomer concentration, initiator concentration and reaction temperature; and the ratio of monomer concentration to initiator concentration of the kinetics relationship is modified by a polymerization efficiency factor, which is expressed as a function of reaction variables affecting initiator effectiveness, to obtain an approximately constant degree of polymerization during the polymerization.

Any kinetics relationship reflective of the particular polymerization, and which is between a selected degree of polymerization and monomer concentration, initiator concentration and reaction temperature, can be used in the present invention. The polymerization efficiency factor is used in the kinetics relationship to account for deviations from ideal kinetics relationships. For the purposes of this invention, ideal kinetics relationships are those which behave according to the particular kinetic relationship which is used. When deviations from ideal kinetics relationships occur, the polymerization efficiency factor will have a value of less than one for some portion or all of the polymerization process. For example, in the process of the invention the polymerization efficiency factor may be less than one for at least some portion of the polymerization and may be empirically derived.

For the purposes of this invention, the terms "polymerization kinetics relationships" and "kinetic relationships" include concentration of any chain transfer agent used in the polymerization as well as monomer concentration, initiator concentration and reaction temperature.

In an embodiment of the invention, the process comprises using either a selected monomer feed profile or a selected initiator feed profile and the other feed profile is calculated from a polymerization kinetics relationship between a selected degree of polymerization ($X_n$) and monomer concentration, initiator concentration, reaction temperature and polymerization efficiency factor to obtain an approximately constant degree of polymerization for polymer produced during the polymerization process (hereinafter, this polymerization kinetics relationship, at times, will be referred to as PMWR).

The invention will be described in terms of selecting the monomer feed profile. However, it is understood that either feed profile can be selected. A selected feed profile includes the addition of the monomer or initiator feed for its complete addition or for a portion of it.

The degree of polymerization, and consequently the molecular weight of the polymer formed, is a function of polymerization rate-determining parameters, molecular weight-determining factors and reactant concentrations. Thus, the present invention allows an approximately constant degree of polymerization to be maintained during the polymerization resulting in a polymer having a narrow molecular weight distribution (MWD) as indicated by a low polydispersity index value. Also, the process of the present invention can be used to produce polymers having narrower MWDs than would be produced if the process of the present invention were not used. The breadth or narrowness of the MWD can be represented by the ratio of weight-average molecular weight ($M_w$) or z-average molecular weight ($M_z$) to number-average molecular weight ($M_n$), i.e., the polydispersity index. When the polydispersity index is represented by $M_w/M_n$, the polydispersity indices of polymers of the present invention are from 1.5 to 6 and most preferably from 1.5 to 4. The polydispersity index is a measure of the breadth of the molecular weight distribution with a minimum value of 1.5 and 2.0 for polymers having the narrowest MWD where polymer chain termination occurs via combination and disproportionation mechanisms, respectively. Higher values for $M_w/M_n$ represent broader distributions, for example, polymers made by previous methods could have polydispersity indices of 10 to 20 or more depending upon the monomers and methods used. Narrow MWD polymers are generally desirable because of the more predictable properties which characterize these polymers versus those with a very broad MWD. For example, contributions to the viscosity of a polymer solution would be more predictable for a narrow MWD polymer than for a polymer with a broad MWD.

In the process of the present invention, a polymerization efficiency factor ($\mathbf{f_p}$) accommodates deviations from ideal kinetics relationships between the degree of polymerization and monomer concentration, initiator concentration and reaction temperature. Conditions which cause the deviations can affect the ability to achieve the desired constant degree of polymerization necessary for narrow polymer molecular weight distributions. Examples of these deviations from ideal kinetics are (a) an increase in viscosity of the polymerization mixture due to high polymer or solids concentrations or the development of high molecular weight polymer, (b) induced decomposition or cage recombination reactions of the initiator, and (c) chain transfer or inhibitor reactions and the like, which affect initiator effectiveness. An increase in viscosity can affect material transport phenomena in the reaction vessel, such as preventing initiator from coming into contact with monomer. Thus, physical conditions related to mixing (for example, agitator type and speed, concentration of initiator in the initiator feed mix, point of initiator mix delivery, etc.) can be factors which cause deviations from ideal kinetics due to changes in viscosity during the polymerization.

Consequently, $\mathbf{f_p}$ addresses elements normally accounted for by the conventional initiator efficiency factor ($f_i$), such as induced decomposition and cage recombinations reactions, and it also addresses any other factors, such as viscosity, material transport phenomena (such as poor mixing resulting in limiting mass transfer of the initiator radicals) or chain transfer reactions, which affect the effectiveness of the initiator. The polymerization efficiency factor is used to modify the ratio of monomer concentration to initiator concentration for a kinetics relationship to maintain an approximately constant degree of polymerization during the polymerization process. The use of $\mathbf{f_p}$ in the present invention accounts for phenomena occurring under actual polymerization conditions by effectively modifying the amount of initiator which theoretically should be added during the polymerization.

The process of the present invention is exemplified by Equations 1 and 2 below which show the polymerization kinetics relationship between degree of polymerization ($X_n$) and monomer concentration ([M]), initiator concentration ([I]), polymerization temperature (T) and polymerization efficiency factor ($f_p$), all to achieve an approximately constant value of $X_n$ and consequently a narrow molecular weight distribution of the desired polymer. Input to a generalized form of **PMWR** (Equation **1**) includes preselecting: $X_n$, an $f_p$ relationship (Equation **2**), a suitable monomer feed profile and reaction temperature. Equation **1** can then be rearranged to solve for initiator concentration, [I], thus providing the basis for the selection and control of the initiator feed profile. In the case where chain transfer reactions are absent ([CTA] = 0), the last term in Equation **1** drops out. Equation **1** is based on standard model kinetic schemes using steady state assumptions which are appropriate for free radical polymerizations, except for the inclusion of the polymerization efficiency factor ($f_p$). For systems other than homogenous solution and bulk free radical polymerization processes, other terms will be required in Equation **1**, which will be apparent to those skilled in the art. Equation **2** is a generalized form of the $f_p$ relationship.

$$X_n = (k_p/k_t^{0.5})[M]/(\{2f_i f_p k_d[I]\}^{0.5} + k_{tr}[CTA]) \tag{1}$$

$$f_p = a + \sum_{j=1}^{m} \sum_{k=1}^{l} b_{jk}(Y_j)^k \tag{2}$$

| | |
|---|---|
| $f_p$ = | polymerization efficiency factor |
| $f_i$ = | initiator efficiency factor |
| $k_p$ = | rate constant for chain propagation |
| | = $A_p exp(-E_p/RT)$ |
| $k_t$ = | rate constant for polymer chain termination |
| | $A_t exp(-E_t/RT)$ |
| $k_d$ = | rate constant for initiator thermal decomposition |
| | $A_d exp(-E_d/RT)$ |
| [M] = | monomer concentration |
| [I] = | initiator concentration |
| $k_{tr}[CTA]$ = | rate of chain transfer = $\Sigma(k_{tr1}[CTA_1] + k_{tr2}[CTA_2] + ...)$ |
| CTA = | chain transfer agent |
| $A_p, A_d, A_t$= | collision frequency factors for chain propagation, initiator decomposition and chain termination |
| $E_p$ = | activation energy for chain propagation |
| $E_t$ = | activation energy for chain termination |
| $E_d$ = | activation energy for initiator decomposition |
| R = | universal gas constant = 1.98 calories/(mole-degree) [8.29 Joules / (mole-degree)] |
| T = | temperature (°C + 273 = °K) |
| C = | degree of monomer conversion (0 $\rightarrow$ 1.0, where 1.0 is 100% conversion) |
| **a** = | fitted parameter |
| $b_{j,k}$ = | empirically derived constant |
| m,l = | any integer greater than 0 |
| j,k = | any integer greater than 0 |
| $Y_j$ = | reaction variable = $\eta$, MW, [P], $X_n$, C, t, etc. |
| $\eta$ = | viscosity |
| MW = | molecular weight |
| [P] = | polymer concentration |
| t = | time |

The following is an example of how the initiator feed profile is determined and then used in the present invention. After selecting a value for $X_n$, a variable initiator feed profile is calculated to match the selected monomer feed profile so that the $X_n$ value is maintained constant during the polymerization (Equation **1** using appropriate $k_p$, $k_t$, $k_d$, $k_{tr}$, $f_i$, activation energy values and a preselected $f_p$ relationship). The initiator feed profile is determined by calculating a new value for [I] at selected time intervals during the polymerization, for example, up to about 100 times per minute. The use of a computer program is preferred to make these calculations. In the absence of chain transfer effects, Equation **3** represents a rearranged form of Equation **1** and is used to solve for [I]:

$$[I] = (k_p[M])^2/2k_dk_tf_if_p(X_n)^2 \qquad\qquad [3]$$

The initial value for the amount of initiator that is to be added during a selected time period (for example, 0.5 to about 1 second) is calculated for the selected time period by using the value for the monomer concentration based on the amount that would have been added according to the selected monomer feed profile at the selected time interval or the measured monomer flow rate, temperature, monomer polymerization rate constant data and initiator decomposition rate constant data. Then a new value for monomer concentration based on the amount that would be added during a second selected time increment in accordance with the selected monomer feed profile is calculated for the second selected time increment by taking into account the amount of monomer polymerized based on the rate of polymerization using the temperature, monomer polymerization rate constant data, initiator decomposition rate constant data and the amount of initiator that is added during the first selected time increment. The new value for [M] calculated for the selected time increment is then used to calculate a new value for [I] consistent with **PMWR** and the next point in the initiator feed profile is thereby defined. This sequence of calculations (one iteration) is then repeated at any needed or desired frequency, such as every 0.5 second to about every 5 minutes, sufficient to further define the initiator feed profile for the entire polymerization. The calculated initiator feed profile is then used in an actual polymerization according to the preselected conditions.

The polymerization efficiency factor ($f_p$) is expressed as a function of one or more reaction variables, for example, degree of monomer conversion (C), viscosity ($\eta$), molecular weight (MW), polymer concentration ([P]), $X_n$ or time (where $Y_j$ in Equation **2** represents the reaction variables). If time is used as a reaction variable, it will relate back to monomer conversion for a given set of reaction conditions. For example, when monomer conversion (C) is selected as the reaction variable, then Equation **2** takes the form of Equation **4**:

$$f_p \;=\; a + \sum_{k=1}^{l} b_{1k}C^k \qquad\qquad [4]$$

when j,m = 1 and where the fitted parameters **a** and $b_{1k}$ are empirically determined by regression analysis to provide the best fit over the entire monomer conversion (C) range for **PMWR** at a selected $X_n$ value (the values for **j**, **k**, **m and l** generally range from 1 to 3). Values of $f_p$ can range from 1 to 0.01 during the polymerization, most commonly from about 0.9 to about 0.3, depending upon the initiator used, degree of monomer conversion, polymer (solids) concentration, polymer molecular weight and extent of cage recombination reactions. Typically, $f_p$ changes only slightly over the period where 10 to about 30% of monomer is converted, but it may steadily decrease as monomer conversions progress from about 50 to about 90% or more. Derivation of the appropriate relationship for $f_p$ as a function of polymerization conditions and adjustment of the initiator feed profile based on the preselected monomer feed profile during the polymerization are the essential features of the process of the present invention.

The following procedure is an example of how the $f_p$ relationship can be experimentally determined and then used in the present invention. As a starting point, the known literature value for $f_i$ of the selected initiator is used, an initial value of 1 is used for $f_p$, together with polymerization rate constant data (obtained from standard literature sources or experimentally determined) and a suitable preselected monomer feed profile is used to calculate an initiator feed profile (described above) for the polymerization of a monomer, such as methyl methacrylate. The polymerization is then conducted using the selected monomer and calculated initiator feed profiles and samples are taken during the polymerization for subsequent analysis of monomer conversion, molecular weight and MWD. Based on the observed molecular weights and changes in MWD as a function of monomer conversion, adjustments to the originally selected $f_p$ relationship are made to account for deviations from desired conversion or MWD targets and a new target $f_p$ relationship is generated by using a regression analysis. Coefficients from the regression analysis become constants **a** and $b_{jk}$ in Equation **2**. Another polymerization is then performed using the new $f_p$ relationship and samples are taken as before for comparison of conversion and MWD with target values. This approach is repeated until a $f_p$ relationship is obtained which results in the desired MWDs being achieved. It would be apparent to one skilled in the art that other properties which correlate with MWD can be used. Alternatively, one can start the process for determining the $f_p$ relationship by assuming a particular relationship, such as a linear form of Equation **2** (for example, $f_p = \{1 - C\}$) and then progressing onto modified versions as described above.

The fitted parameter **a** takes into account factors not accounted for by the particular $Y_j$ variable that has been selected. For example, modifications to $f_p$ or determination of $f_p$ relationship (Equation **2**) can take the following form:

$$f_p = \{a\text{-}C\}$$

where **a** = *function*(viscosity, MW, [P], $X_n$, side reactions which consume initiator, etc.); $b_{11}$ is - 1; $Y_1$ is monomer conversion, C. In another form, Equation **2** can be:

$$f_p = \{a - (\eta_c/\eta_o)\}$$

where **a** = *function*(MW, [P], C, $X_n$, side reactions which consume initiator, etc.); $b_{11}$ is - 1; $Y_1$ is $\eta_c/\eta_o$, where $\eta_o$ is initial viscosity, $\eta_c$ is viscosity at a certain monomer conversion. In yet another form, Equation **2** can be:

$$f_p = \{a + C - C^2 - [P]\}$$

where **a** = *function*(viscosity, MW, $X_n$, side reactions which consume initiator, etc.); $b_{11}$ is 1; $b_{12}$ is - 1; $b_{21}$ is - 1; $Y_1$ is monomer conversion, C; $Y_2$ is polymer concentration, [P].

One embodiment of Equation 2 is:

$$f_p = \{a + b_{11}C + b_{12}C^2\}$$

where C is monomer conversion and **a**, $b_{11}$ and $b_{12}$ are constants.

Once the $f_p$ relationship and monomer and initiator feed profiles have been defined for certain conditions, the polymerization can be conducted repeatedly, preferably with a preprogrammed controller, using the preselected monomer and calculated initiator feed profiles. The resulting polymer will have the desired narrow MWD resulting from a constant degree of polymerization being maintained during the polymerization.

For polymerizations with a gel or Trommsdorf effect, the $k_p$, $k_t$ rate constants in Equation **1** will not reflect the actual polymerization rates throughout a particular polymerization. For these polymerizations there is a decrease in the rate of diffusion of polymer radicals at some point, thus lowering the effective rate of termination and causing a significant increase in overall polymerization rate or autoacceleration. Propagation and termination rate data ($k_p/k_t^{0.5}$) for these polymerizations can be derived from experimental monomer conversion data at different temperatures. The experimental data can be subjected to mathematical modelling using commercially available regression analysis and model simulation computer software to generate the kinetic rate parameters used in Equation **1**. In this way, the $k_p$, $k_t$ data and the activation energy data ($E_p$, $E_t$) will reflect polymerization kinetics which account for the Trommsdorf effect. In the case where the Trommsdorf effect occurs at some intermediate point during the polymerization, such as at around 50 or 90% monomer conversion, Equation **1** would have two parts which describe the entire polymerization process: the first would use $k_p$, $k_t$, activation energy data representative of the polymerization up to 50% (or 90%) conversion and the second form would use $k_p$, $k_t$, activation energy data representative of the polymerization from 50% (or 90%) monomer conversion to completion. Determination of the $f_p$ relationship for use in this form of Equation **1** is done in the same manner as described above.

When an isothermal polymerization is conducted and there is no significant Trommsdorf effect, $X_n$ will remain relatively constant during the polymerization provided that the $[M]/\{f_i f_p[I]\}^{0.5}$ ratio is kept constant by balancing the monomer and initiator feed rates and $f_p$ according to Equation **1** (in the absence of chain transfer effects). When an isothermal polymerization is not used, for example, staged temperature profiles may be desirable or isothermal conditions are not readily attained, $k_p$, $k_t$ and $k_d$ will vary as a function of temperature and this must be taken into account in maintaining a target $X_n$ value by the use of activation energies in conjunction with Equation **1**. Unless an initiator feed profile is calculated using **PMWR** for a selected $X_n$, the difference between the rate of change in monomer and initiator concentrations during the polymerization is a variable which leads to broadening of the MWD, as is observed for conventional processes where all the monomers and all the initiator are charged to the reactor at one time.

Values for $k_d$, $k_p$, $k_t$, $k_{tr}$ and $f_i$ and their temperature dependence (activation energies) may be obtained from well known literature references, such as **Polymer Handbook** by J. Bandrup and E.H. Immergut (Third Edition, John Wiley & Sons, 1989) or determined by established experimental methods as described in **Encyclopedia of Polymer Science and Engineering, Volume 13,** pp 847-852 (Second Edition, John Wiley & Sons, 1988) or generated from experimental monomer conversion data obtained at different temperatures using regression analysis mathematical modelling methods. When concentrations or ratios of monomer, initiator or chain transfer agent ([M], [I], [CTA]) are referred to, such as in Equation **1**, it is understood that the instantaneous concentrations for these materials are being used, i.e., unreacted monomer, undissociated initiator (that is, initiator which is not yet decomposed) and unreacted chain transfer agent, respectively.

Chain transfer agents may also be added to the polymerization reaction to control the magnitude of the molecular weight of the polymer. Although not required by the process of the present invention, chain transfer agents are especially useful for limiting the average degree of polymerization when low molecular weight polymers are desired. When chain transfer agents are used, both the initiator feed profile and the chain transfer agent feed profile must be calculated during the polymerization using **PMWR** to maintain the target $X_n$ value. In **PMWR**, [CTA] refers to any material which causes chain transfer to occur, i.e., reacts with and terminates the propagating radical and transfers the radical species to the material acting as a chain transfer agent. Therefore, $k_{tr}$[CTA] represents an overall chain transfer rate which includes all species which can act as chain transfer agents: monomers, solvents, as well as conventional chain transfer agents which are purposely added to control molecular weight.

In an embodiment of the invention the polymerization process comprises (a) selecting the degree of polymerization, (b) selecting a monomer feed profile for the desired polymer, (c) calculation of the initiator feed profile based on the relationship between the selected degree of polymerization and monomer concentration, initiator concentration, reaction temperature and polymerization efficiency factor, wherein the polymerization efficiency factor is expressed as a function of reaction variables which affect initiator effectiveness, is empirically derived and is less than one for at least some portion of the polymerization, (d) addition of the monomer to a reaction vessel under polymerization conditions in accordance with the selected monomer feed profile, (e) addition of the initiator to the reaction vessel in accordance with the calculated initiator feed profile, and (f) maintenance of reaction conditions for a sufficient period of time after complete addition of the monomer and initiator to allow them to react, all to obtain an approximately constant degree of polymerization for the polymer during the polymerization process. The process of the invention enables one to obtain more than 90% conversion (by weight) of monomer to polymer, provided that reaction conditions be maintained for a sufficient period of time after complete addition of the monomer and initiator.

In one embodiment of the invention, the monomer and initiator which have been added to the reaction vessel are monitored on a continuous basis by a means suitable to determine amounts added, the amounts added are compared to predetermined profile values for added monomer and added initiator as a function of time, and the monomer and initiator feed profiles are adjusted accordingly whenever the difference between the predetermined profile values for added monomer or added initiator and the amounts added is not zero.

In a preferred method of conducting the polymerization, the amounts of monomer and initiator fed to the reactor at any given time are constantly monitored together with the temperature and compared to predetermined target values established by **PMWR**. Any displacement from target values for monomer added, initiator added and temperature (for example, whenever the difference between predetermined profile (target) values for added monomer and initiator and the amounts which have been added is not zero) is then treated by an adjustment in the rate of monomer or initiator addition to reestablish profile values for reaction temperature (in the case of an isothermal polymerization) and $X_n$. The frequency with which the amounts of monomer and initiator and the temperature is monitored can vary widely depending upon the equipment and devices available for such measurements. Means suitable for measuring the amounts of monomer and initiator added at any give time include sensors connected to monomer and initiator feed containers via load cells, in-line mass meters and similar devices. Continuous monitoring is most preferred, but measurement updated from 5 to 10 up to about 30 times per minute represents a desired frequency range with a corresponding adjustment in the initiator feed profile. Observed changes in the monomer feed profile or reaction temperature from target profile values are used on a continuing basis during the polymerization to update the initiator feed rate.

A more refined method of controlling $X_n$ can be attained by measuring the monomer concentration by a suitable means on a continuous basis during the polymerization and adjusting the initiator feed profile to satisfy the selected $X_n$ value. That is, the monomer concentration in the reaction vessel is measured on a continuous basis by a means suitable for measuring monomer concentration and the measured monomer concentration is used thereafter in the polymerization kinetics relationship between degree of polymerization and monomer concentration, initiator concentration, reaction temperature and polymerization efficiency factor to adjust the initiator feed profile accordingly during the polymerization process. One means suitable for measuring the in-process monomer concentration involves use of a sampling loop attached to the reaction vessel which circulates a small representative portion of the reaction mixture through a chamber containing a detection device, such as ultraviolet, refractive index and infrared detectors and then returns the reaction mixture sample to the main reaction vessel. Calibration curves relating the spectroscopic results to monomer concentration would be used to provide an instantaneous value for monomer concentration.

In a similar manner, the bulk viscosity of the contents of the reaction vessel can be measured by a suitable means to determine if adjustments in the initiator feed profile are required. One means suitable for measuring the bulk viscosity at any given time involves using an in-line viscosity probe and then comparing the measured bulk viscosity with experimental correlations of viscosity, polymer concentration, molecular weight and temperature. For example, a bulk viscosity for contents of the reaction vessel can be measured on a continuous basis by a means suitable for measuring viscosity and the monomer and initiator feed profiles can be adjusted accordingly during the polymerization process based on using the bulk viscosity in the polymerization kinetics relationship between degree of polymerization and monomer concentration, initiator concentration, reaction temperature and polymerization efficiency factor to satisfy a predetermined target for the degree of polymerization.

The polymerizations are conducted by preparing separate monomer mix and initiator mix feeds and adding them to the reaction vessel. The reaction vessel may contain a diluent. For example, in order to aid in mixing and heat transfer of the reactor contents, the reaction vessel can contain a small amount of diluent, such as polymer, solvent or additional monomer, and mixtures thereof. The optional use of diluent in this manner sometimes is referred to in the art as a heel process. The heel may comprise from about 5 to about 30% of the total amount of materials to be added to the reactor, preferably from about 10 to about 20%. In the case where monomer is used as any part of the heel, this amount of monomer is included in calculating the initiator feed profile required to satisfy **PMWR**.

The monomer feed can consist of a single monomer or a mixture of monomers. Multiple monomer feeds of different monomers or monomer mixtures can be used. The multiple monomer feeds can have different feed rates in order to control the incorporation of monomers of different reactivities, such as acrylic esters and styrene derivatives. In such a case, a more complex form of the polymerization kinetics relationship, e.g., Equation **1**, must be derived according to the well-known copolymer equation based on the use of monomer reactivity ratios and cross termination rate constants (**Polymer Handbook,** *ibid.*). The monomer feed can contain a small amount of initiator, preferably no more than up to about 10% by weight of the total initiator to be used in the polymerization; most preferably the monomer feed contains no initiator. If some initiator is present in the monomer feed, then this amount is taken into account when calculating the initiator feed profile. The monomer feed can also contain a small amount of diluent, preferably no more than about 10 to about 40% by weight of total diluent to be used in the polymerization.

In a similar fashion the initiator feed may consist of a single initiator or a mixture of initiators. Multiple initiator feeds of different initiators can be used. The multiple initiator feeds can have different feed rates in order to provide initiators of different reactivities; this would be particularly advantageous in the case where staged temperature profiles, rather than isothermal conditions, are used. In the case where multiple initiator feeds are used, the initiator term in Equation **1** becomes the sum of the individual initiator terms, i.e., $2f_i\mathbf{f_p}k_d[I] = \Sigma(2f_{i1}\mathbf{f_{p1}}k_{d1}[I_1] + 2f_{i2}\mathbf{f_{p2}}k_{d2}[I_2] + ....)$ .

The monomer and initiator are not added all at one time. The additions can take several forms, for example, a continuous feed or multiple shot additions of portions of monomer or initiator over some period of time. A suitable monomer feed profile can be any profile which allows subsequent selection of an initiator feed profile so that the conditions of **PMWR** can be satisfied for maintaining the desired $X_n$ constant during the polymerization without exceeding the limits of the reactor design, for example, control of the exothermicity of the polymerization. Among the forms of monomer feed profiles useful in this invention are those where the monomer is added (a) at a steady rate throughout its time of addition, (b) at a steadily increasing or decreasing rate throughout its time of addition, (c) at a steadily increasing rate for the initial portion and at a steadily decreasing rate for the latter portion of its time of addition, (d) at alternating increasing and decreasing rates throughout its time of addition or (e) at a steadily decreasing rate for the initial portion and at a steadily increasing rate for the latter portion of its time of addition. In another form of monomer feed profile, referred to as multistaged addition, a combination of feed profiles (a), (b) and (c) described above may be used where the monomer is added to the reaction vessel in several stages comprising (i) a first stage in which 5 to 20% by weight of the total monomer is added at an approximately constantly increasing rate over a 10 to 40 minute period, (ii) a second stage in which 30 to 70% by weight of the total monomer is added at an approximately constant rate over a 10 to 60 minute period, and (iii) a final stage in which the remainder of the monomer is added at an approximately constantly decreasing rate over a 20 to 120 minute period. Preferably, in this multi-staged addition the monomer added in the first stage (a) is from 5 to 10 percent by weight of total monomer and is added over a 10 to 15 minute period, the monomer added in the second stage (b) is from 40 to 60 percent by weight of total monomer and is added over a 20 to 40 minute period, and the monomer added in the final stage (c) is added over a 45 to 60 minute period.

After the monomer and initiator feeds have been completely added to the reaction vessel, reaction conditions are maintained for some additional time to allow the initiator to fully decompose and react with residual monomer. In this way high monomer conversions can be achieved, for example, greater than about 90% by weight of monomer to polymer, preferably greater than about 95% and more preferably greater than about 97%. The upper limit of the percent monomer conversion is determined by thermodynamic factors and will vary depending upon the monomers involved and temperatures used in the polymerization process. The addition time periods mentioned above would be typical of many polymerizing systems, but the exact addition times could vary widely depending upon the exact monomers and the overall rates of polymerization involved. The multistaged addition of monomer has been found to provide optimal control of the amount of heat evolved during the polymerization resulting in a preferred method for ensuring isothermal conditions throughout the polymerization within the limits of heat dissipation and cooling capabilities of conventional reaction vessels. The monomer feed profiles described above are representative of the wide range of profiles suitable for use in the present invention and are not intended to limit the invention.

In the specific case of polymerizing alkyl acrylate and alkyl methacrylate monomers, the monomer mix can be added to the reaction vessel in several stages in which 5 to 10% of the total monomer is added at a constantly increasing rate over 10 to 15 minutes during the first stage, 40 to 60% of the total monomer is added at a uniform rate over 20 to 40 minutes during the second stage, and the remainder of the monomer is added at a constantly decreasing rate over 45 to 60 minutes during the third stage. The exact amounts of monomer and feed times can vary slightly depending upon the specific monomers used and the polymerization temperature selected. The amounts and addition rates used above are suitable for reaction temperatures of about 100 to about 120°C. If somewhat lower temperatures are used, a slightly slower rate of addition would be used to maintain control of the exotherm during the polymerization.

Polymers using the process of this invention can be prepared under a wide variety of conditions. For example, reactions can be run under an inert atmosphere at temperatures of from about 20 to 150°C, depending upon the monomers and initiator systems used. Isothermal, staged temperature profile or exotherm processes may be used. As is recognized by those skilled in the art, the time and temperature of the polymerization reaction are dependent on the choice of initiator and can be varied accordingly. For example, in the case of emulsion polymerization, temperatures from room temperature, e.g., about 20°C, up to about 80°C can be used with certain redox initiator systems. In addition, thermally activated initiators, such as persulfate salts, *tert*-butyl peroxalate, *tert*-butyl perbenzoate and *tert*-butyl peroxide, can be used in the temperature range of about 20°C to about 150°C for emulsion polymerizations.

Initiators useful for this polymerization process are any of the well known free-radical-producing compounds such as peroxy, hydroperoxy and azo initiators including acetyl peroxide, benzoyl peroxide, lauroyl peroxide, *tert*-butyl peroxyisobutyrate, caproyl peroxide, cumene hydroperoxide, 1,1-di(*tert*-butylperoxy)-3,3,5-trimethylcyclohexane, azobisisobutyronitrile and *tert*-butyl peroctoate. The initiator usage is normally between 0.025 and 1% by weight, based on the total weight of the monomers, and more preferably from 0.05 to 0.5%, depending upon the monomers involved.

Chain transfer agents can also be used to control the molecular weight of the polymer. Preferred chain transfer agents are alkyl mercaptans such as butyl mercaptan, lauryl mercaptan (also known as dodecyl mercaptan), *tert*-dodecyl mercaptan, carbon tetrachloride and carbon tetrabromide. The concentrations of chain transfer agent used are from 0 to about 2% by weight, with the higher concentrations being used for lower molecular weight polymers.

Among the diluents suitable for use in the polymerization are aromatic hydrocarbons (such as benzene, toluene, xylene and aromatic naphthas), chlorinated hydrocarbons (such as ethylene dichloride, chlorobenzene and dichlorobenzene), esters (such as ethyl propionate or butyl acetate), aliphatic hydrocarbons, e.g. $(C_6\text{-}C_{20})$aliphatic hydrocarbons (such as cyclohexane, heptane and octane), petroleum base oils (such as paraffinic and naphthenic oils) or synthetic base oils. Synthetic base oils include: poly-(alkylmethacrylate) lubricating oil additives; olefin copolymer (OCP) lubricating oil additives, such as poly(ethylene-propylene) or poly(isobutylene); hydrogenated styrene-diene (HSD) copolymer lubricating oil additives, such as poly (styrene-butadiene).

Diluents may be added to the monomer mix, in which case they are added to the reaction vessel along with the monomer feed. Diluents are also used to provide an inert solvent heel for the polymerization, in which case they are added to the reaction vessel before the monomer and initiator feeds are started to provide an appropriate volume of liquid in the reaction vessel to promote good mixing of the monomer and initiator feeds, particularly in the early part of the polymerization. When a lubricating oil is used as a diluent it may contain unsaturated impurities which can interfere with the polymerization process. It is desirable to limit the level of these impurities in the lubricating oil to minimize side reactions; therefore, lubricating oils having bromine numbers less than about 12 are preferred for use as diluents in the present invention (the bromine number is a standard analytical measure of the amount of unsaturated materials present in a material). Preferably, materials selected as diluents should be essentially non-reactive towards the initiators or intermediates in the polymerization to minimize side reactions such as chain transfer and the like. This is particularly important when very narrow molecular weight distributions are desired. The diluent may also be any polymeric material which acts as a solvent and is otherwise compatible with the monomers and polymerization ingredients being used. Particularly preferred as a diluent is the polymer which results from using the monomers being polymerized.

Monomers used in the present invention may be any monomers capable of polymerizing with themselves (homopolymers) or comonomers (copolymers) and which are relatively soluble in the homopolymer or copolymer formed. Preferably the monomers are monoethylenically unsaturated monomers. Polyethylenically unsaturated monomers which lead to crosslinking during the polymerization, in which case the concept of molecular weight control loses its significance, are generally undesirable. Polyethylenically unsaturated monomers which do not lead to crosslinking or only crosslink to a small degree, e.g., butadiene, are satisfactory comonomers. Small amounts of crosslinkable monomers may be present in the monomer mix as long as their presence does not appreciably affect the control of molecular weight and MWD according to **PMWR**.

One class of suitable monoethylenically unsaturated monomers is vinylaromatic monomers which includes, among others, styrene, α-methylstyrene, vinyltoluene, *p*-methylstyrene, ethylvinylbenzene, vinylnaphthalene and vinylxylenes,. The vinylaromatic monomers can also include their corresponding substituted counterparts, such as halogenated derivatives, i.e., containing one or more halogen groups, such as fluorine, chlorine or bromine; and nitro, cyano, alkoxy, haloalkyl, carbalkoxy, carboxy, amino and alkylamino derivatives.

Another class of suitable monoethylenically unsaturated monomers is nitrogen-containing ring compounds, such as vinylpyridine, 2-methyl-5-vinylpyridine, 2-ethyl-5-vinylpyridine, 3-methyl-5-vinylpyridine, 2,3-dimethyl-5-vinylpyridine, 2-methyl-3-ethyl-5-vinylpyridine, methyl-substituted quinolines and isoquinolines, N-vinylcaprolactam, N-vinylbutyrolactam and N-vinylpyrrolidone.

Another class of suitable monoethylenically unsaturated monomers is substituted ethylene monomers, such as vinyl acetate, vinyl chloride, vinyl fluoride, vinyl bromide, vinylidene chloride, vinylidene fluoride, vinylidene bromide, acrylonitrile, methacrylonitrile, acrylic acid and corresponding amides and esters, methacrylic acid and corresponding amides and esters.

A particularly preferred class of acrylic and methacrylic acid derivatives is represented by alkyl acrylate, alkyl methacrylate, substituted alkyl acrylate and methacrylate and substituted acrylamide and methacrylamide monomers. Each of the monomers can be a single monomer or a mixture having different numbers of carbon atoms in the alkyl portion. Preferably, the monomers are selected from the group consisting of $(C_1-C_{24})$alkyl methacrylates, $(C_1-C_{24})$alkyl acrylates, hydroxy$(C_2-C_6)$alkyl methacrylates, hydroxy$(C_2-C_6)$alkyl acrylates, dialkylamino$(C_2-C_6)$alkyl methacrylates, dialkylamino$(C_2-C_6)$alkyl acrylates, dialkylamino$(C_2-C_6)$alkyl methacrylamides and dialkylamino$(C_2-C_6)$alkyl acrylamides. The alkyl portion of each monomer can be linear or branched.

Of particular interest is the production of polymers for use as lubricating oil additives with good dispersant or dispersant and viscosity index improver characteristics wherein the monomer comprises from 70 to 98 weight percent of monomer selected from the group consisting of $(C_1-C_{24})$alkyl meth-acrylates and $(C_1-C_{24})$alkyl acrylates, and from 2 to 30 weight percent of monomer selected from the group consisting of hydroxy$(C_2-C_6)$alkyl methacrylates and hydroxy$(C_2-C_6)$alkyl acrylates, wherein the number of carbon atoms in the alkyl groups averages from 7 to 14, and the polymer, for example, has a weight-average molecular weight ($M_w$) of from 20,000 to 1,000,000. In this embodiment the $(C_1-C_{24})$alkyl methacrylate and $(C_1-C_{24})$alkyl acrylate monomers may comprise (a) from 0 to 40 percent by weight of an alkyl methacrylate or alkyl acrylate in which the alkyl group contains from 1 to 6 carbon atoms, or mixture thereof, (b) from 30 to 90 percent by weight of an alkyl methacrylate or alkyl acrylate in which the alkyl group contains from 7 to 15 carbon atoms, or mixture thereof, (c) from 0 to 40 percent by weight of an alkyl methacrylate or alkyl acrylate in which the alkyl group contains from 16 to 24 carbon atoms, or mixture thereof. Preferably, monomer (a) is methyl methacrylate, butyl methacrylate, isobutyl methacrylate or mixtures thereof, monomer (b) is 2-ethylhexyl methacrylate, isodecyl methacrylate, dodecyl-pentadecyl methacrylate, lauryl-myristyl methacrylate or mixtures thereof, monomer (c) is cetyl-stearyl methacrylate, cetyl-eicosyl methacrylate or mixtures thereof, and the hydroxy$(C_2-C_6)$alkyl methacrylate and hydroxy$(C_2-C_6)$alkyl acrylate monomer is 2-hydroxyethyl methacrylate, 2-hydroxyethyl acrylate, 2-hydroxypropyl methacrylate, 1-methyl-2-hydroxyethyl methacrylate, 2-hydroxypropyl acrylate, 1-methyl-2-hydroxyethyl acrylate, 2-hydroxybutyl methacrylate, 2-hydroxybutyl acrylate or mixtures thereof, and preferably the hydroxy$(C_2-C_6)$alkyl methacrylate monomer is a mixture of 2-hydroxypropyl methacrylate and 1-methyl-2-hydroxy-ethyl methacrylate. Preferably, monomer (a) is from zero to 20 percent by weight monomer, (b) is from 45 to 85 percent by weight monomer, (c) is from 5 to 35 percent by weight and the hydroxy-$(C_2-C_6)$alkyl methacrylate monomer is from 4 to 20% by weight of a mixture of 2-hydroxypropyl methacrylate and 1-methyl-2-hydroxyethyl methacrylate. More preferably, monomer (a) is from zero to 10 percent by weight monomer, (b) is from 50 to 70 percent by weight monomer, (c) is from 20 to 35 percent by weight and the hydroxy $(C_2-C_6)$alkyl methacrylate monomer is from 5 to 15 percent by weight of a mixture of 2-hydroxypropyl methacrylate and 1-methyl-2-hydroxyethyl methacrylate.

In another embodiment of the invention, the monomer comprises 60 to 100 weight percent of monomer selected from the group consisting of $(C_1-C_{24})$alkyl methacrylates and $(C_1-C_{24})$alkyl acrylates, wherein these monomers may comprise (a) 0 to 40% of an alkyl methacrylate or alkyl acrylate in which the alkyl group contains from 1 to 6 carbon atoms, or mixture thereof, (b) from 30 to 90% of an alkyl methacrylate or alkyl acrylate in which the alkyl group contains from 7 to 15 carbon atoms, or mixture thereof, and (c) 0 to 40% of an alkyl methacrylate or alkyl acrylate in which the alkyl group contains from 16 to 24 carbon atoms, or mixture thereof; and 0 to 40% of mono-ethylenically unsaturated monomer (d). All percentages are by weight, are based on the total weight of the polymer, and the total of (a), (b), (c) and (d) equals 100 percent of the weight of the polymer.

Examples of monomer (a), the alkyl methacrylate or alkyl acrylate where the alkyl group contains from 1 to 6 carbon atoms (also called the "low-cut" alkyl methacrylate or alkyl acrylate), are methyl methacrylate (MMA), methyl and ethyl acrylate, propyl methacrylate, butyl methacrylate (BMA) and acrylate (BA), isobutyl methacrylate (IBMA), hexyl and cyclohexyl methacrylate, cyclohexyl acrylate and combinations thereof. Preferred low-cut alkyl methacrylates are methyl methacrylate, butyl methacrylate, isobutyl methacrylate or mixtures thereof. More preferred low-cut alkyl methacrylates are methyl methacrylate and butyl methacrylate.

Examples of monomer (b), the alkyl methacrylate or alkyl acrylate where the alkyl group contains from 7 to 15 carbon atoms (also called the "mid-cut" alkyl methacrylates acrylates or alkyl acrylates), are 2-ethylhexyl acrylate (EHA), 2-ethylhexyl methacrylate, octyl methacrylate, decyl methacrylate, isodecyl methacrylate (IDMA, based on branched $(C_{10})$alkyl isomer mixture), undecyl methacrylate, dodecyl methacrylate (also known as lauryl methacrylate), tridecyl methacrylate, tetradecyl methacrylate (also known as myristyl methacrylate), pentadecyl methacrylate and combinations thereof. Also useful are: dodecyl-pentadecyl methacrylate (DPMA), a mixture of linear and branched isomers of dodecyl, tridecyl, tetradecyl and pentadecyl methacrylates; and lauryl-myristyl methacrylate (LMA), a mixture of dodecyl and tetradecyl methacrylates. The preferred mid-cut alkyl methacrylates are 2-ethylhexyl methacrylate, isodecyl methacrylate, dodecyl-pentadecyl methacrylate, laurylmyristyl methacrylate or mixtures thereof. More preferred mid-cut alkyl methacrylates are lauryl-myristyl methacrylate and isodecyl methacrylate.

Examples of monomer (c), the alkyl methacrylate or alkyl acrylate where the alkyl group contains from 16 to 24 carbon atoms (also called the "high-cut" alkyl methacrylates or alkyl acrylates), are hexadecyl methacrylate, heptadecyl methacrylate, octadecyl methacrylate, nonadecyl methacrylate, cosyl methacrylate, eicosyl methacrylate and combinations thereof. Also useful are: cetyl-eicosyl methacrylate (CEMA), a mixture of hexadecyl, octadecyl, cosyl and eicosyl methacrylate; and cetylstearyl methacrylate (SMA), a mixture of hexadecyl and octadecyl methacrylate. The preferred high-cut alkyl methacrylates are cetyl-eicosyl methacrylate and cetyl-stearyl methacrylate or mixtures thereof.

The mid-cut and high-cut alkyl methacrylate and alkyl acrylate monomers described above are generally prepared by standard esterification procedures using technical grades of long chain aliphatic alcohols, and these commercially available alcohols are mixtures of alcohols of varying chain lengths containing between 10 and 15 or 16 and 20 carbon atoms in the alkyl group. Consequently, for the purposes of this invention, alkyl methacrylate is intended to include not only the individual alkyl methacrylate product named, but also to include mixtures of the alkyl methacrylates with a predominant amount of the particular alkyl methacrylate named.

Monomer (d) may, for example, comprise a vinylaromatic monomer, a substituted ethylene monomer, a monomer having a nitrogeno-containing ring (each previously described) or mixtures thereof.

Additional examples of monomer (d) are those alkyl methacrylate and acrylate monomers with one or more hydroxyl groups in the alkyl radical, especially those where the hydroxyl group is found at the $\beta$-position (2-position) in the alkyl radical. Hydroxyalkyl methacrylate and acrylate monomers in which the substituted alkyl group is a $(C_2\text{-}C_6)$alkyl, branched or unbranched, are preferred. Among the hydroxyalkyl methacrylate and acrylate monomers suitable for use in the present invention are 2-hydroxyethyl methacrylate (HEMA), 2-hydroxyethyl acrylate, 2-hydroxypropyl methacrylate, 1-methyl-2-hydroxyethyl methacrylate, 2-hydroxy-propyl acrylate, 1-methyl-2-hydroxyethyl acrylate, 2-hydroxybutyl methacrylate, 2-hydroxybutyl acrylate, or mixtures thereof. The preferred hydroxyalkyl methacrylate and acrylate monomers are HEMA, 1-methyl-2-hydroxyethyl methacrylate and 2-hydroxypropyl methacrylate. A mixture of the latter two monomers is commonly referred to as "hydroxypropyl methacrylate" or HPMA. HPMA is a more preferred hydroxyalkyl methacrylate.

Further examples of monomer (d) are those alkyl methacrylate and acrylate monomers with a dialkylamino group in the alkyl radical, such as dimethylaminoethyl methacrylate and dimethylaminoethyl acrylate.

Other examples of monomer (d) are dialkylaminoalkyl methacrylamide and acrylamide monomers, such as N,N-dimethylaminoethyl methacrylamide, N,N-dimethyl-aminopropyl methacrylamide, N,N-dimethylaminobutyl methacrylamide, N,N-diethylaminoethyl methacrylamide, N,N-diethylaminopropyl methacrylamide and N,N-diethylaminobutyl methacrylamide. A preferred dialkylaminoalkyl methacrylamide is N,N-dimethylaminopropyl methacrylamide.

Preferred polymers for use as lubricating oil additives with good dispersant or dispersant and viscosity index improver characteristics are those where monomer (a) is selected from one or more of methyl methacrylate, butyl methacrylate and isobutyl methacrylate, (b) is selected from one or more of 2-ethylhexyl methacrylate, isodecyl methacrylate, dodecyl-pentadecyl methacrylate and lauryl-myristyl methacrylate, (c) is selected from one or more of cetyl-stearyl methacrylate and cetyl-eicosyl methacrylate, and the monoethylenically unsaturated monomer (d) is selected from one or more of 2-hydroxyethyl methacrylate, 2-hydroxyethyl acrylate, 2-hydroxypropyl methacrylate, 1-methyl-2-hydroxyethyl methacrylate, 2-hydroxy-propyl acrylate, 1-methyl-2-hydroxyethyl acrylate, 2-hydroxybutyl methacrylate and 2-hydroxybutyl acrylate.

In a preferred embodiment of the invention, the polymerization process is used to produce polymers useful as lubricating oil additives with good dispersant or dispersant and viscosity index improver characteristics where: the amount of (a) in the polymer is preferably from 0 to 20%, and more preferably from 0 to 10%; the amount of (b) is preferably from 45 to 85%, and more preferably from 50 to 70%; the amount of (c) is from 5 to 35%, and more preferably from 20 to 35%; and the amount of (d) is preferably from 4 to 20%, and more preferably from 5 to 15%.

Poly(alkylmethacrylate) and poly(alkylacrylate) polymers produced by the process of the present invention having polydispersity indices from about 2 to about 6, and most preferably from about 2 to about 4, are useful as improved lubricating oil additives because the narrow MWD polymers allow more efficient use of the additive to satisfy a particular formulated engine oil viscosity specification, e.g., up to about 10 to 15% less additive may be required to produce a viscosity of about $9 \times 10^{-3}$ to $2 \times 10^{-2}$ Pa s (about 9 to about 20 centipoise) (at 100°C) in a 100N base oil compared to an additive satisfying the same viscosity specification and having a polydispersity index of about 10.

Polymers produced by the process of the present invention may, for example, have a weight-average molecular weight of from 20,000 to 1,000,000.

The process of this invention can be used to produce polymers by bulk, solution or emulsion polymerization techniques. In the case of emulsion polymerization, the basic equations defining the polymerization rate dependence include a term based on the number of emulsion particles generated. Equations corresponding to Equation **1** can be derived for emulsion polymerization using well-known relationships available in standard polymer textbooks. Suspension polymerization processes can also benefit from the process of the present invention if adequate transfer of the initiator feed from the continuous phase (usually aqueous based) into the suspension particles or dispersed phase (usually water-insoluble) is achieved so that an approximately constant value of $X_n$ can be maintained during the polymerization.

The process of this invention can be used to produce prepolymers which are subsequently used as substrates for graft polymers. That is, the benefits of narrow MWD polymers can be used in grafting the same or different monomers onto a polymer prepared by the process of the invention. In these cases, molecular weight characterization can be determined for the prepolymer made by the process of the invention, but the final graft polymer may not be as readily characterized because of polymer branching which occurs during the grafting step.

The process of this invention can be used to produce polymers by semi-batch or semi-continuous methods. As used herein, semi-batch refers to processes in which reactants are added to a reactor, one or more of which may be added over the course of the reaction, and the finished polymer is removed as the final product after polymerization has been completed. A batch polymerization refers to processes in which the reactants are all added to the reactor initially and the finished polymer is removed as the final product after polymerization has been completed. A continuous polymerization refers to processes in which all reactants (in a constant relationship to one another) are added to a reactor on a continuous basis and a polymer-reactant stream is removed on a continuous basis at the same rate that reactants are added. As used herein, semi-continuous refers to processes in which continuous-mode reactors are connected in series such that the resultant polymer-reactant mixture of each continuous reactor is fed into the next reactor in the series and each continuous reactor uses a different set of conditions representing step function changes in monomer ratios, monomer feed rates, initiator to monomer ratios, or initiator feed rates; the resultant polymer product from the last reactor in the series would be similar to a polymer having been produced by operating one reactor in a semi-batch mode.

The following Examples are presented to illustrate preferred embodiments of the present invention. Examples 1-6 illustrate use of the process of the present invention to produce polymers. Examples 4-6 further illustrate use of the invention when the polymerizations are conducted in the presence of polymeric additives as part of the diluent media. All ratios and percentages are by weight, and all reagents are of good commercial quality unless otherwise indicated.

## EXAMPLE I

A monomer mix was prepared from 150 grams cetyl-eicosyl methacrylate (100% basis, 95% purity), 280 grams isodecyl methacrylate (100% basis, 98% purity), 45 grams methyl methacrylate, 25 grams hydroxypropyl methacrylate and 40 grams of paraffinic base oil (100N oil). The total amount of monomer came to 500 grams and the total amount of monomer mix was 554 grams. Equations corresponding to Equations **1**, and **2** were established for the monomer mix and a monomer feed profile was selected (described below) together with a calculated initiator feed profile (described below) based on a selected $X_n$ of 700 and an initiator efficiency factor ($f_i$) of 0.7 for *tert*-butyl peroctoate. Initiator data (constants, activation energies) were derived from data in **Polymer Handbook,** *ibid.*, or data supplied by the manufacturer or supplier of the initiator. Propagation and termination rate data ($k_p/k_t^{0.5}$) for the monomer mix were derived from experimental conversion data at different temperatures. The SimuSolv computer application program (modelling and simulation software available from Dow Chemical Co. - "SimuSolv" is a trademark) was used to analyze the data to generate the kinetic rate parameters used in Equation **1**; the monomer mix was treated as a single "alkyl" methacrylate for the purposes of computation. A linear form of the polymerization efficiency factor, which is representative of a steady decrease of $f_p$ with increasing monomer conversion, was selected for use in this Example. Whenever the selected $f_p$ relationship calculated a value for $f_p$ less than 0.1 in this Example, a value of 0.1 was used for the remainder of the polymerization. Values for constants and related data used in Equations **1** and **2** are presented below:

$$k_p/k_t^{0.5} = (3777)\exp(-5181/1.98T); \quad E_p - E_t/2 = 5181 \text{ cal/mole } (21.693 \times 10^3 \text{ J mole}^{-1})$$

$$k_d = (5 \times 10^{15}) \exp(-29685/1.98T); \quad E_d = 29685 \text{ cal/mole } (124.291 \times 10^3 \text{ J mole}^{-1})$$

$$k_{tr}[CTA] = 0 \text{ in Equation 1}$$

$$f_i = 0.7$$

$$f_p = \{1 - C\} = \text{Equation 2 where a is 1, } b_{11} \text{ is -1 and } Y_j \text{ is C}$$

$$T = 120°C + 273 = 393°K$$

$$X_n = 700 \text{ (selected)}$$

$$X_n = \{(3777)\exp(-5181/1.98T)\}[M]/\{2\{0.7(1 - C)\}\{(5 \times 10^{15})\exp(-29685/1.98T)\}[I]\}^{0.5} = \text{Equation 1}$$

The monomer mix was fed to a nitrogen flushed 1-litre cylindrical kettle (containing 100 grams of paraffinic base oil which had been preheated to 120°C) fitted with a thermocouple and proportional temperature controller, a water-cooled reflux condenser with nitrogen outlet, a stirrer, a nitrogen inlet, and two addition funnels to control the addition of monomer and initiator mixes. The monomer mix was added in three stages using the following monomer feed profile: stage 1 - 46 grams was added over 10 minutes such that the rate of addition was steadily increased from 0 grams/minute (g/min) initially to approximately 9 g/min at the end of 10 minutes; stage 2 - 277 grams was then added at a uniform rate of about 9 g/min over 30 minutes; stage 3 - the remaining 231 grams was then added over 50 minutes such that the rate of addition was steadily decreased from about 9 g/min initially to 0 g/min at the end of 50 minutes.

Based on the monomer feed profile described above and using a selected (target) value of 700 for $X_n$, Equation 1 was solved for [I] to provide the initiator feed profile. The computer program used to calculate the initiator feed profile was set up so that a new value for [I] would be calculated 100 times per minute. For example, using a value for added monomer based on the selected monomer feed profile, a new value for [M] was calculated based on the rate of polymerization using the temperature, monomer polymerization rate constant data, initiator decomposition rate constant data and the amount of initiator already added. The new value for [M] was then used to calculate a new value for [I] consistent with Equation 1 and the initiator feed profile was adjusted accordingly. This sequence of calculations (one iteration) was repeated every 0.6 seconds and the new value for [I] was then used to adjust the initiator feed until the next calculation and adjustment occurred.

An initiator solution of 1.2 grams of *tert*-butyl peroctoate (*tert*-butylperoxy-2-ethylhexanoate) and 5.0 grams of paraffinic base oil was also fed as a separate stream starting at the same time as the monomer feed. The initiator feed was added at a varying rate (based on the calculations described above) in several stages: stage 1 - about 1.6 grams was added over the first 40 minutes such that the rate of addition was steadily increased from about 0.02 g/min initially to about 0.07 g/min at the end of 40 minutes; stage 2 - about 1.35 grams was added at a uniform rate of about 0.07 g/min over the next 20 minutes; stage 3 - about 1.4 grams was added over the next 30 minutes such that the rate of addition was steadily decreased from about 0.07 g/min initially to about 0.04 g/min at the end of 30 minutes; stage 4 - about 1.8 grams was added over the next 100 minutes such that the rate of addition was steadily decreased from about 0.04 g/min initially to 0 g/min at the end of 100 minutes. The initiator feed extended beyond complete addition of the monomer mix feed for about 1.5 to 2 hours, until at least 90% monomer conversion was attained, 92% (dialysis measurement) in this case. Table 1 below summarizes the amount of monomer mix and initiator mix added to the reaction kettle as a function of time. Heating or cooling was applied as needed to maintain the polymerization temperature at 120°C. Approximately 360 grams of paraffinic oil base stock was then added to bring the batch to a theoretical solids of 50% polymer in oil. After 30 minutes of mixing at 120°C the batch was homogeneous and the polymerization was considered complete.

The shear stability index (SSI) is a parameter which can be used to characterize polymers which are used as lubricating oil additives in the automotive industry for mechanical stability and can be directly correlated to polymer molecular weight. SSI is a measure of the percent loss in polymeric additive-contributed viscosity due to shear and can be determined by measuring viscosity before and after sonic irradiation according to ASTM D-2603-91 (published by the American Society for Testing and Materials). In general, higher molecular weight polymers undergo the greatest relative reduction in molecular weight when subjected to high shear conditions and, therefore, higher molecular weight polymers also exhibit the largest SSI values. The crude polymer from this preparation had an SSI of 59.5%.

The molecular weight distribution of the crude polymer was measured by GPC (gel permeation chromatography) using tetrahydrofuran solvent and poly(methylmethacrylate) molecular weight standards. The crude polymer had a polydispersity index (ratio of $M_w$ to $M_n$) of 4.39 ($M_w$ was 1,039,000; $M_n$ was 236,000).

The polymer solution was then further diluted with Exxon 150N oil and homogenized to satisfy viscosity specifications.

## TABLE 1

| Time (min) | Total Monomer Mix Fed (g) | Total Initiator Mix Fed (g) |
|---|---|---|
| 2 | 1.8 | 0.018 |
| 4 | 7.4 | 0.039 |
| 6 | 17 | 0.06 |
| 8 | 29 | 0.08 |
| 10 | 46 | 0.12 |
| 15 | 92 | 0.26 |
| 20 | 138 | 0.44 |
| 25 | 186 | 0.65 |
| 30 | 231 | 0.93 |
| 35 | 277 | 1.24 |
| 40 | 323 | 1.56 |
| 50 | 396 | 2.26 |
| 60 | 461 | 2.91 |
| 70 | 517 | 3.45 |
| 80 | 544 | 3.92 |

## TABLE 1 (continued)

| Time (min) | Total Monomer Mix Fed (g) | Total Initiator Mix Fed (g) |
|---|---|---|
| 90 | 554 | 4.33 |
| 100 | —— | 4.73 |
| 131 | —— | 5.61 |
| 160 | —— | 6.12 |
| 190 | —— | 6.16 |

## EXAMPLE 2

In a manner similar to Example 1, 150 grams of cetyl-stearyl methacrylate (100% basis, 95% purity), 280 grams isodecyl methacrylate (100% basis, 98% purity), 45 grams methyl methacrylate, and 25 grams hydroxypropyl methacrylate were polymerized. The monomer mix addition rates were the same and the amount of initiator was increased slightly to produce a slightly lower molecular weight polymer. Table 2 below summarizes the amount of monomer mix and initiator mix added to the reaction kettle as a function of time. The $X_n$ target was 500 and a quadratic form of the polymerization efficiency factor was used. The $f_p$ values were based on comparison of trial experiments with target values for monomer conversion followed by least squares regression analysis of the revised $f_p$ data to generate constants for the $f_p$ relationship used in this Example. The $f_p$ relationship took the following form: $f_p = = \{0.746 + 0.203C - 0.873C^2\}$, Equation 2 where $a$ is 0.746, $b_{11}$ is 0.203, $b_{12}$ is -0.873 and $Y_j$ is C. A total of 7.09 grams of initiator solution was added over 170 minutes and the final monomer conversion was 96.7% (dialysis measurement). The crude polymer had an SSI of 45.7%.

The molecular weight distribution of the crude polymer was measured by GPC (gel permeation chromatography) using tetrahydrofuran solvent and poly(methylmethacrylate) molecular weight standards. The crude polymer had a polydispersity index (ratio of $M_w$ to $M_n$) of 4.32 ($M_w$ was 716,000; $M_n$ was 166,000).

TABLE 2

| Time (min) | Total Monomer Mix Fed (g) | Total Initiator Mix Fed (g) |
|---|---|---|
| 2 | 1.8 | 0.0005 |
| 4 | 7.4 | 0.007 |
| 6 | 17 | 0.01 |
| 8 | 29 | 0.06 |
| 10 | 46 | 0.16 |
| 15 | 92 | 0.46 |
| 20 | 138 | 0.81 |
| 25 | 186 | 1.16 |
| 30 | 231 | 1.50 |
| 35 | 277 | 1.88 |
| 40 | 323 | 2.26 |
| 50 | 396 | 3.06 |
| 60 | 461 | 3.70 |
| 70 | 517 | 4.39 |
| 80 | 544 | 4.96 |
| 90 | 554 | 5.41 |
| 100 | ---- | 5.75 |
| 130 | ---- | 6.43 |
| 160 | ---- | 6.89 |
| 170 | ---- | 7.09 |

## EXAMPLE 3

In a manner similar to Example 1, 140 grams cetyl-eicosyl methacrylate (100% basis, 95% purity), 310 grams isodecyl methacrylate (100% basis, 98% purity), 50 grams methyl methacrylate were polymerized. The monomer mix addition rates were the same, 6.54 grams of initiator mix was added over 210 minutes and the final monomer conversion was 95.5% (spectroscopic analysis). The $X_n$ target was 700 and the selected $f_p$ relationship was the same as that of Example 1. The crude polymer had an SSI of 51.9%.

The molecular weight distribution of the crude polymer was measured by GPC (gel permeation chromatography) using tetrahydrofuran solvent and poly(methylmethacrylate) molecular weight standards. The crude polymer had a polydispersity index (ratio of $M_w$ to $M_n$) of 4.23 ($M_w$ was 784,000; $M_n$ was 185,000).

## EXAMPLE 4

In a manner similar to Example 1, a monomer mix consisting of 240 grams of cetyl-stearyl methacrylate (100% basis, 95% purity), 448 grams isodecyl methacrylate (100% basis, 98% purity), 72 grams methyl methacrylate, 40 grams hydroxypropyl methacrylate and 64 grams of paraffinic base oil (100N oil) was prepared. The total amount of monomer came to 800 grams and the total amount of monomer mix was 886 grams. The monomer mix was fed to a nitrogen flushed 1.5-litre cylindrical kettle containing 77 grams of a poly(alkylmethacrylate) lubricating oil additive (Acryloid 156, available from Rohm and Haas Co. - "Acryloid" is a trademark) and 83 grams of paraffinic base oil (100N oil) using a feed rate of 1.6 times that of the monomer feed rate used in Example 1. The initiator mix consisted of 20% (weight) *tert*-butyl peroctoate in paraffinic base oil (100N oil). The $X_n$ target was 600 and the selected $f_p$ relationship was the same as that of Example 2. Table 3 below summarizes the amount of monomer mix and initiator mix added to the reaction kettle as a function of time. Approximately 540 grams of paraffinic oil base stock was added at the end of the polymerization to bring the batch to a solids of 50.8% polymer in oil. A total of 9.8 grams of initiator solution was added over 329 minutes and the final monomer conversion was 96.1% (dialysis measurement). The crude polymer had an SSI of 56.9%.

TABLE 3

| Time (min) | Total Monomer Mix Fed (g) | Total Initiator Mix Fed (g) |
|---|---|---|
| 2 | 3 | 0.0006 |

TABLE 3 (continued)

| Time (min) | Total Monomer Mix Fed (g) | Total Initiator Mix Fed (g) |
|---|---|---|
| 4 | 12 | 0.009 |
| 6 | 27 | 0.012 |
| 8 | 47 | 0.08 |
| 10 | 72 | 0.18 |
| 15 | 145 | 0.56 |
| 20 | 219 | 1.07 |
| 25 | 290 | 1.57 |
| 30 | 361 | 2.07 |
| 35 | 433 | 2.72 |
| 40 | 505 | 3.41 |
| 50 | 636 | 4.77 |
| 60 | 730 | 5.88 |
| 70 | 811 | 7.11 |
| 80 | 860 | 8.05 |
| 90 | 886 | 8.72 |
| 120 | ---- | 9.68 |
| 150 | ---- | 9.72 |
| 180 | ---- | 9.73 |
| 210 | ---- | 9.74 |
| 240 | ---- | 9.75 |
| 270 | ---- | 9.77 |
| 329 | ---- | 9.8 |

## EXAMPLE 5

In a manner similar to Example 4, a monomer mix consisting of 240 grams of cetyl-stearyl methacrylate (100% basis, 95% purity), 448 grams isodecyl methacrylate (100% basis, 98% purity), 72 grams methyl methacrylate, 40 grams hydroxypropyl methacrylate and 64 grams of paraffinic base oil (100N oil) was prepared. The monomer mix was fed to a nitrogen flushed 1.5-litre cylindrical kettle containing 160 grams of an ethylene-propylene copolymer lubricating oil additive (TLA 347A, 13.4% weight percent OCP in paraffinic base oil, available from Texaco Chemical Co. - "TLA" is a trademark) instead of the poly(alkylmethacrylate) lubricating oil additive. The monomer and initiator feed rates, $X_n$ target and the selected $f_p$ relationship used were the same as those in Example 4. Table 4 below summarizes the amount of monomer mix and initiator mix added to the reaction kettle as a function of time. Final polymer solids was 49.8%, a total of 13.1 grams of initiator solution was added over 310 minutes and the final monomer conversion was 96.8% (dialysis measurement). The crude polymer had an SSI of 59.7%.

TABLE 4

| Time (min) | Total Monomer Mix Fed (g) | Total Initiator Mix Fed (g) |
|---|---|---|
| 2 | 3 | 0.0006 |
| 4 | 12 | 0.009 |
| 6 | 27 | 0.012 |
| 8 | 47 | 0.08 |
| 10 | 74 | 0.26 |
| 15 | 147 | 0.65 |
| 20 | 218 | 0.97 |
| 25 | 290 | 1.41 |
| 30 | 361 | 1.85 |
| 35 | 433 | 2.61 |
| 40 | 504 | 3.48 |
| 50 | 634 | 4.82 |

TABLE 4   (continued)

| Time (min) | Total Monomer Mix Fed (g) | Total Initiator Mix Fed (g) |
|---|---|---|
| 60 | 730 | 5.76 |
| 70 | 812 | 7.06 |
| 80 | 860 | 8.19 |
| 90 | 886 | 8.72 |
| 120 | ---- | 9.33 |
| 150 | ---- | 10.5 |
| 180 | ---- | 11.4 |
| 210 | ---- | 12.2 |
| 240 | ---- | 12.4 |
| 270 | ---- | 12.6 |
| 310 | ---- | 13.1 |

## EXAMPLE 6

In a manner similar to Example 4, a monomer mix consisting of 240 grams of cetyl-stearyl methacrylate (100% basis, 95% purity), 448 grams isodecyl methacrylate (100% basis, 98% purity), 72 grams methyl methacrylate, 40 grams hydroxypropyl methacrylate and 64 grams of paraffinic base oil (100N oil) was prepared. The monomer mix was fed to a nitrogen flushed 1.5-litre cylindrical kettle containing 160 grams of a hydrogenated styrene-diene copolymer lubricating oil additive (Shellvis 40, 6.0% weight percent HSD in paraffinic base oil, available from Shell Chemical Co. - "Shellvis" is a trademark) instead of the poly(alkylmethacrylate) lubricating oil additive. The monomer and initiator feed rates, $X_n$ target and the selected $f_p$ relationship used were the same as those in Example 4. Final polymer solids was 49.1%, a total of 9.8 grams of initiator solution was added over 310 minutes and the final monomer conversion was 96.7% (dialysis measurement). The crude polymer had an SSI of 60.2%.

## Claims

1.   A polymerization process, which comprises adding monomer and initiator to a reaction vessel under polymerization conditions using a monomer feed profile and an initiator feed profile, wherein: one of the feed profiles is preselected; the feed profiles are such that the ratio of monomer concentration to initiator concentration is determined in accordance with a polymerization kinetics relationship between a selected degree of polymerization for the polymer and monomer concentration, initiator concentration and reaction temperature; and the ratio of monomer concentration to initiator concentration of the kinetics relationship is modified by a polymerization efficiency factor, which is expressed as a function of reaction variables affecting initiator effectiveness, to obtain an approximately constant degree of polymerization during the polymerization.

2.   A process as claimed in claim 1, wherein the initiator is added to the reaction vessel using a selected initiator feed profile and the monomer is added to the reaction vessel using a monomer feed profile which is calculated from a polymerization kinetics relationship between a selected degree of polymerization and monomer concentration, initiator concentration, reaction temperature and polymerization efficiency factor.

3.   A process as claimed in claim 1, wherein the monomer is added to the reaction vessel using a selected monomer feed profile and the initiator is added to the reaction vessel using an initiator feed profile which is calculated from a polymerization kinetics relationship between a selected degree of polymerization and monomer concentration, initiator concentration, reaction temperature and polymerization efficiency factor.

4.   A process as claimed in claim 1, wherein the polymerization efficiency factor is less than one for at least some portion of the polymerization and is empirically derived.

5.   A process as claimed in claim 4, wherein the polymerization efficiency factor is expressed as a function of degree of monomer conversion:

$$f_p = \{a + b_{11}C + b_{12}C^2\}$$

wherein $f_p$ is the polymerization efficiency factor, C is degree of monomer conversion and **a**, **b$_{11}$** and **b$_{12}$** are constants, and $f_p$ is from 1 to 0.01.

6. A process as claimed in claim 1, wherein the monomer and initiator which have been added to the reaction vessel are monitored on a continuous basis by a means suitable to determine amounts added, the amounts added are compared to predetermined profile values for added monomer and added initiator as a function of time, and the monomer and initiator feed profiles are adjusted accordingly whenever the difference between the predetermined profile values for added monomer or added initiator and the amounts added is not zero.

7. A process as claimed in claim 1, wherein the monomer concentration in the reaction vessel is measured on a continuous basis by a means suitable for measuring monomer concentration and the measured monomer concentration is used thereafter in the polymerization kinetics relationship between degree of polymerization and monomer concentration, initiator concentration, reaction temperature and polymerization efficiency factor to adjust the initiator feed profile accordingly during the polymerization process.

8. A process as claimed in claim 1, wherein a bulk viscosity for contents of the reaction vessel is measured on a continuous basis by a means suitable for measuring viscosity and the monomer and initiator feed profiles are adjusted accordingly during the polymerization process based on using the bulk viscosity in the polymerization kinetics relationship between degree of polymerization and monomer concentration, initiator concentration, reaction temperature and polymerization efficiency factor to satisfy a predetermined target for the degree of polymerization.

9. A process as claimed in any preceding claim, further comprising maintaining reaction conditions for a sufficient period of time after complete addition of the monomer and initiator such that more than 90% of the monomer is converted to polymer.

10. A process as claimed in any preceding claim, wherein the polymer has a polydispersity index of from 1.5 to 6 when the polydispersity index is expressed as the ratio of weight-average molecular weight to number-average molecular weight.

11. A polymerization process as claimed in claim 1, which comprises:

    (a) selecting a degree of polymerization for the desired polymer;
    (b) selecting a monomer feed profile;
    (c) calculating an initiator feed profile from the polymerization kinetics relationship between the selected degree of polymerization and monomer concentration, initiator concentration, reaction temperature, and polymerization efficiency factor, wherein the polymerization efficiency factor is expressed as a function of reaction variables which affect initiator effectiveness, is empirically derived and is less than one for at least some portion of the polymerization;
    (d) adding the monomer to the reaction vessel under polymerization conditions in accordance with the selected monomer feed profile of step (b);
    (e) adding the initiator to the reaction vessel in accordance with the calculated initiator feed profile of step (c); and
    (f) maintaining reaction conditions for a sufficient period of time after complete addition of the monomer and initiator to allow them to react;

    to obtain an approximately constant degree of polymerization for the polymer during the polymerization process.

12. A process of claim 11, wherein more than 90% of the monomer is converted to polymer.

13. A process of claim 11 or claim 12, wherein the polymer has a polydispersity index of from 1.5 to 6 when the polydispersity index is expressed as the ratio of weight-average molecular weight to number-average molecular weight.

14. A process as claimed in any of claims 11 to 13, wherein the polymerization efficiency factor is expressed as a function of degree of monomer conversion:

$$f_p = \{a + b_{11}C + b_{12}C^2\}$$

wherein $f_p$ is the polymerization efficiency factor, C is degree of monomer conversion and $a$, $b_{11}$ and $b_{12}$ are constants derived from a regression analysis, and $f_p$ is from 1 to 0.01.

15. A process as claimed in any of claims 11 to 14, wherein the monomer is added in several stages comprising:

(a) a first stage in which 5 to 20 percent by weight of total monomer is added at an approximately constantly increasing rate over a 10 to 40 minute period;
(b) a second stage in which 30 to 70 percent by weight of total monomer is added at an approximately constant rate over a 10 to 60 minute period; and
(c) a final stage in which the remainder of the monomer is added at an approximately constantly decreasing rate over a 20 to 120 minute period.

16. A process as claimed in claim 15, wherein the monomer added in the first stage (a) is from 5 to 10 percent by weight of total monomer and is added over a 10 to 15 minute period, the monomer added in the second stage (b) is from 40 to 60 percent by weight of total monomer and is added over a 20 to 40 minute period, and the monomer added in the final stage (c) is added over a 45 to 60 minute period.

17. A process as claimed in any of claims 11 to 16, wherein the monomer comprises from 70 to 98 weight percent of a monomer selected from the group consisting of $(C_1-C_{24})$alkyl methacrylates and $(C_1-C_{24})$alkyl acrylates and from 2 to 30 weight percent of a monomer selected from the group consisting of hydroxy$(C_2-C_6)$-alkyl methacrylates and hydroxy$(C_2-C_6)$alkyl acrylates wherein the number of carbon atoms in the alkyl groups averages from 7 to 14.

18. A process as claimed in claim 17, wherein the $(C_1-C_{24})$alkyl methacrylate and $(C_1-C_{24})$alkyl acrylate monomers comprise:

(a) from 0 to 40 percent by weight of an alkyl methacrylate or alkyl acrylate in which the alkyl group contains from 1 to 6 carbon atoms, or mixture thereof,
(b) from 30 to 90 percent by weight of an alkyl methacrylate or alkyl acrylate in which the alkyl group contains from 7 to 15 carbon atoms, or mixture thereof,
(c) from 0 to 40 percent by weight of an alkyl methacrylate or alkyl acrylate in which the alkyl group contains from 16 to 24 carbon atoms, or mixture thereof.

19. A process as claimed in claim 18, wherein monomer (a) is methyl methacrylate, butyl methacrylate, isobutyl methacrylate or mixtures thereof, monomer (b) is 2-ethylhexyl methacrylate, isodecyl methacrylate, dodecyl-pentadecyl methacrylate, lauryl-myristyl methacrylate or mixtures thereof, monomer (c) is cetyl-stearyl methacrylate, cetyl-eicosyl methacrylate or mixtures thereof, and wherein the hydroxy$(C_2-C_6)$alkyl methacrylate and hydroxy$(C_2-C_6)$ alkyl acrylate monomer is 2-hydroxyethyl methacrylate, 2-hydroxyethyl acrylate, 2-hydroxypropyl methacrylate, 1-methyl-2-hydroxyethyl methacrylate, 2-hydroxypropyl acrylate, 1-methyl-2-hydroxyethyl acrylate, 2-hydroxybutyl methacrylate, 2-hydroxybutyl acrylate or mixtures thereof.

20. A process as claimed in claim 19, wherein the hydroxy$(C_2-C_6)$alkyl methacrylate monomer is a mixture of 2-hydroxypropyl methacrylate and 1-methyl-2-hydroxy-ethyl methacrylate.

21. A process as calimed in any of claims 18 to 20, wherein monomer (a) is from zero to 20 percent by weight monomer, (b) is from 45 to 85 percent by weight monomer, (c) is from 5 to 35 percent by weight and the hydroxy-$(C_2-C_6)$alkyl methacrylate monomer is from 4 to 20% by weight of a mixture of 2-hydroxypropyl methacrylate and 1-methyl-2-hydroxyethyl methacrylate.

22. A process as claimed in claim 21, wherein monomer (a) is from zero to 10 percent by weight monomer, (b) is from 50 to 70 percent by weight monomer, (c) is from 20 to 35 percent by weight and the hydroxy $(C_2-C_6)$alkyl methacrylate monomer is from 5 to 15 percent by weight of a mixture of 2-hydroxypropyl methacrylate and 1-methyl-2-hydroxyethyl methacrylate.

23. A process as claimed in claim 15 or claim 16, wherein the monomer comprises from 60 to 100 weight percent of a monomer selected from $(C_1-C_{24})$alkyl methacrylates and $(C_1-C_{24})$alkyl acrylates, and from zero to 40 weight percent of a monoethylenically unsaturated monomer.

24. A process as claimed in claim 23, wherein the $(C_1-C_{24})$alkyl methacrylate and $(C_1-C_{24})$alkyl acrylate monomers comprise:

(a) from 0 to 40 percent by weight of an alkyl methacrylate or alkyl acrylate in which the alkyl group contains from 1 to 6 carbon atoms, or mixture thereof,
(b) from 30 to 90 percent by weight of an alkyl methacrylate or alkyl acrylate in which the alkyl group contains from 7 to 15 carbon atoms, or mixture thereof,
(c) from 0 to 40 percent by weight of an alkyl methacrylate or alkyl acrylate in which the alkyl group contains from 16 to 24 carbon atoms, or mixture thereof;

and the monoethylenically unsaturated monomer comprises a vinylaromatic monomer, a substituted ethylene monomer, a monomer having a nitrogen-containing ring or mixtures thereof.

25. A process as claimed in any of claims 11 to 24, wherein the polymer has a weight-average molecular weight of from 20,000 to 1,000,000, and a polydispersity index of from 2 to 6 when the polydispersity index is expressed as the ratio of weight-average molecular weight to number-average molecular weight.

26. A process as claimed in claim 11 to 25, wherein a diluent is present in the reaction vessel during the polymerization.

27. A process as claimed in claim 26, wherein the diluent is selected from the group consisting of aliphatic hydrocarbons, aromatic hydrocarbons, chlorinated hydrocarbons, esters, petroleum base oils and synthetic base oils.

28. A process as claimed in claim 27, wherein the synthetic base oil is selected from poly(alkylmethacrylate), olefin copolymer and hydrogenated styrene-diene copolymer lubricating oil additives.

29. A process as claimed in claim 28, wherein the olefin copolymer is a poly(ethylene-propylene) lubricating oil additive.

30. A process as claimed in claim 28 or claim 29, wherein the hydrogenated styrene-diene copolymer is a hydrogenated poly(styrene-butadiene) lubricating oil additive.

## Patentansprüche

1. Polymerisationsverfahren, umfassend die Zugabe von Monomerem und Initiator in ein Reaktionsgefäß unter Polymerisationsbedingungen unter Verwendung eines Profils der Monomerzufuhr und eines Profils der Initiatorzufuhr, wobei eines der Zufuhrprofile vorgewählt ist, die Zufuhrprofile so sind, daß das Verhältnis von Monomerkonzentration zur Initiatorkonzentration bestimmt wird in Übereinstimmung mit einer Beziehung der Polymerisationskinetik zwischen einem gewählten Grad von Polymerisation für das Polymere und Monomerkonzentration, Inititatorkonzentration und Reaktionstemperatur; und das Verhältnis von Monomerkonzentration zu Initiatorkonzentration der kinetischen Beziehung modifiziert wird durch einen Faktor der Polymerisationswirksamkeit, der ausgedrückt wird als Funktion von Reaktionsvariablen, welche die Wirksamkeit des Initiators beeinflussen, um einen etwa konstanten Polymerisationsgrad während der Polymerisation zu erhalten.

2. Verfahren nach Anspruch 1, dadurch gekennzeichnet, daß der Initiator in das Reaktionsgefäß unter Verwendung eines gewählten Profils der Initiatorzufuhr gegeben wird und das Monomere in das Reaktionsgefäß unter Verwendung eines Profils der Monomerzufuhr zugegeben wird, das berechnet ist aus einer Beziehung der Polymerisationskinetik zwischen einem gewählten Grad von Polymerisation und Monomerkonzentration, Initiatorkonzentration, Reaktionstemperatur und Faktor der Polymerisationswirksamkeit.

3. Verfahren nach Anspruch 1, dadurch gekennzeichnet, daß das Monomere in das Reaktionsgefäß unter Verwendung eines gewählten Profils der Monomerzufuhr gegeben wird und der Initiator in das Reaktionsgefäß unter Verwendung eines Profils der Initiatorzufuhr gegeben wird, das berechnet wird aus einer Beziehung der Polymerisationskinetik zwischen einem gewählten Grad von Polymerisation und Monomerkonzentration, Initiatorkonzentration, Reaktionstemperatur und Faktor der Polymerisationswirksamkeit.

4. Verfahren nach Anspruch 1, dadurch gekennzeichnet, daß der Faktor der Polymerisationswirksamkeit weniger ist als eins für wenigstens einen gewissen Teil der Polymerisation und empirisch abgeleitet wird.

5. Verfahren nach Anspruch 4, dadurch gekennzeichnet, daß der Faktor der Polymerisationswirksamkeit ausgedrückt wird als Funktion des Grads der Monomerumwandlung:

$$f_p = \{a + b_{11}C + b_{12}C^2\}$$

wobei $f_p$ der Faktor der Polymerisationswirksamkeit ist, C der Grad der Monomerumwandlung ist und a, $b_{11}$ und $b_{12}$ Konstanten sind, und $f_p$ von 1 bis 0,01 ist.

6. Verfahren nach Anspruch 1, dadurch gekennzeichnet, daß das Monomere und der Initiator, die in das Reaktionsgefäß gegeben wurden, auf kontinuierlicher Basis durch eine Maßnahme, die sich zur Bestimmung der zugesetzten Mengen eignet, überwacht werden, die zugegebenen Mengen mit den Werten der vorbestimmten Profilwerte für zugesetztes Monomeres und zugesetzten Initiator als Funktion der Zeit verglichen werden und die Profile der Monomer- und Initiatorzufuhr demgemäß eingestellt werden, wann immer die Differenz zwischen den Werten des vorbestimmten Profils für zugesetztes Monomeres oder zugesetzen Initiator und den zugesetzten Mengen nicht null ist.

7. Verfahren nach Anspruch 1, dadurch gekennzeichnet, daß die Monomerkonzentration im Reaktionsgefäß auf kontinuierlicher Basis durch eine Maßnahme, die sich zur Messung der Monomerkonzentration eignet, gemessen wird und die gemessene Monomerkonzentration danach in der Beziehung der Polymerisationskinetik zwischen dem Grad der Polymerisation und Monomerkonzentration, Initiatorkonzentration, Reaktionstemperatur und Faktor der Polymerisationswirksamkeit benutzt wird, um das Profil der Initiatorzufuhr demgemäß während des Polymerisationsverfahrens anzupassen.

8. Verfahren nach Anspruch 1, dadurch gekennzeichnet, daß eine Volumenviskosität für den Inhalt des Reaktionsgefäßes auf kontinuierlicher Basis durch Maßnahmen, die sich zur Viskositätsmessung eignen, gemessen wird und die Profile der Monomer- und Initiatorzufuhr demgemäß während des Polymerisationsverfahrens angepaßt werden, beruhend auf Verwendung der Volumenviskosität in der Beziehung der Polymerisationskinetik zwischen dem Polymerisationsgrad und Monomerkonzentration, Initiatorkonzentration, Reaktionstemperatur und Faktor der Polymerisationswirksamkeit, um ein vorbestimmtes Ziel für den Polymerisationsgrad zu erfüllen.

9. Verfahren nach irgendeinem der vorhergehenden Ansprüche, dadurch gekennzeichnet, daß es weiter umfaßt die Aufrechterhaltung der Reaktionsbedingungen für eine genügende Zeitspanne nach vollständiger Zugabe des Monomeren und Initiators derart, daß mehr als 90% des Monomeren in Polymeres umgewandelt werden.

10. Verfahren nach irgendeinem der vorhergehenden Ansprüche, dadurch gekennzeichnet, daß das Polymere einen Polydispersitätsindex von 1,5 bis 6 hat, wenn der Polydispersitätsindex ausgedrückt wird als Verhältnis des Gewichtsdurchschnitts-Molekulargewichts zum Zahlendurchschnitts-Molekulargewicht.

11. Polymerisationsverfahren nach Anspruch 1, dadurch gekennzeichnet, daß es umfaßt:

(a) Auswahl eines Polymerisationsgrads für das gewünschte Polymere;
(b) Auswahl des Profils der Monomerzufuhr;
(c) Berechnung eines Profils der Initiatorzufuhr aus der Beziehung der Polymerisationskinetik zwischen dem gewählten Polymerisationsgrad und Monomerkonzentration, Initiatorkonzentration, Reaktionstemperatur und Faktor der Polymerisationswirksamkeit, wobei der Faktor der Polymersationswirksamkeit ausgedrückt wird als Funktion von Reaktionsvariablen, welche die Wirksamkeit des Initiators beeinflussen, empirisch abgeleitet ist und weniger als eins ist für wenigstens einen Teil der Polymerisation;
(d) Zugabe des Monomeren zum Reaktionsgefäß unter Polymerisationsbedingungen gemäß dem gewählten Profil der Monomerzufuhr von Stufe (b);
(e) Zugabe des Initiators zum Reaktionsgefäß gemäß dem berechneten Profil der Initiatorzufuhr von Stufe (c); und
(f) Aufrechterhaltung der Reaktionsbedingungen für eine ausreichende Zeitspanne nach vollständiger Zugabe des Monomeren und Initiators, um sie reagieren zu lassen;

um einen etwa konstanten Polymerisationsgrad für das Polymere während des Polymerisationsverfahrens zu erhalten.

12. Verfahren nach Anspruch 11, dadurch gekennzeichnet, daß mehr als 90% des Monomeren ins Polymere überführt werden.

13. Verfahren nach Anspruch 11 oder 12, dadurch gekennzeichnet, daß das Polymere einen Polydispersitätsindex von 1,5 bis 6 hat, wenn der Polydispersitätsindex ausgedrückt wird als das Verhältnis von Gewichtsdurchschnitts-Molekulargewicht zu Zahlendurchschnitts-Molekulargewicht.

14. Verfahren nach irgendeinem der Ansprüche 11 bis 13, dadurch gekennzeichnet, daß der Faktor der Polymerisationswirksamkeit ausgedrückt wird als Funktion des Grads der Monomerumwandlung:

$$f_p = \{a + b_{11}C + b_{12}C^2\}$$

worin $f_p$ der Faktor der Polymerisationswirksamkeit ist, C der Grad der Monomerumwandlung ist und a, $b_{11}$ und $b_{12}$ Konstanten sind, die von einer Regressionsanalyse abgeleitet sind, und $f_p$ von 1 bis 0,01 ist.

15. Verfahren nach irgendeinem der Ansprüche 11 bis 14, dadurch gekennzeichnet, daß das Monomere in mehreren Stufen zugesetzt wird, umfassend:

(a) eine erste Stufe, in welcher 5 bis 20 Gew.-% des gesamten Monomeren bei einer etwa konstant zunehmenden Geschwindigkeit über eine Zeitspanne von 10 bis 40 Minuten zugegeben werden;
(b) eine zweite Stufe, in welcher 30 bis 70 Gew.-% des gesamten Monomeren bei einer etwa konstanten Geschwindigkeit über eine Zeitspanne von 10 bis 60
Minuten zugegeben werden; und (c) eine Endstufe, in welcher der Rest des Monomeren bei einer etwa konstant abnehmenden Geschwindigkeit über eine Zeitspanne von 20 bis 120 Minuten zugegeben werden.

16. Verfahren nach Anspruch 15, dadurch gekennzeichnet, daß das in der ersten Stufe (a) zugegebene Monomere von 5 bis 10 Gew.-% des gesamten Monomeren ist und über eine Zeitspanne von 10 bis 15 Minuten zugegeben wird, daß das in der zweiten Stufe (b) zugegebene Monomere von 40 bis 60 Gew.-% des gesamten Monomeren ist und über eine Zeitspanne von 20 bis 40 Minuten zugegeben wird, und das Monomere, das in der Endstufe (c) zugegeben wird, über eine Zeitspanne von 45 bis 60 Minuten zugegeben wird.

17. Verfahren nach irgendeinem der Ansprüche 11 bis 16, dadurch gekennzeichnet, daß das Monomere von 70 bis 98 Gew.-% eines Monomeren umfaßt, das ausgewählt ist aus der Gruppe bestehend aus $(C_1\text{-}C_{24})$-Alkylmethacrylaten und $(C_1\text{-}C_{24})$-Alkylacrylaten, und von 2 bis 30 Gew.-% eines Monomeren, ausgewählt aus der Gruppe bestehend aus Hydroxy-$(C_2\text{-}C_6)$-alkylmethacrylaten und Hydroxy-$(C_2\text{-}C_6)$-alkylacrylaten, wobei die Anzahl der Kohlenstoffatome in den Alkylgruppen im Durchschnitt 7 bis 14 ist.

18. Verfahren nach Anspruch 17, dadurch gekennzeichnet, daß die $(C_1\text{-}C_{24})$-Alkylmethacrylat- und $(C_1\text{-}C_{24})$-Alkylacrylatmonomeren umfassen:

(a) 0 bis 40 Gew.-% eines Alkylmethacrylats oder Alkylacrylats, worin die Alkylgruppe 1 bis 6 Kohlenstoffatome enthält oder ein Gemisch davon,
(b) 30 bis 90 Gew.-% eines Alkylmethacrylats oder Alkylacrylats, worin die Alkylgruppe 7 bis 15 Kohlenstoffatome enthält oder ein Gemisch davon,
(c) 0 bis 40 Gew.-% eines Alkylmethacrylats oder Alkylacrylats, worin die Alkylgruppe 16 bis 24 Kohlenstoffatome enthält oder ein Gemisch davon.

19. Verfahren nach Anspruch 18, dadurch gekennzeichnet, daß das Monomere (a) Methylmethacrylat, Butylmethacrylat, Isobutylmethacrylat oder Gemische davon ist, das Monomere (b) 2-Ethylhexylmethacrylat, Isodecylmethacrylat, Dodecyl-pentadecylmethacrylat, Lauryl-myristylmethacrylat oder Gemische davon ist, daß das Monomere (c) Cetyl-stearylmethacrylat, Cetyl-eicosylmethacrylat oder Gemische davon ist, und worin das Hydroxy-$(C_2\text{-}C_6)$-alkylmethacrylat- und Hydroxy-$(C_2\text{-}C_6)$-alkylacrylatmonomere 2-Hydroxyethylmethacrylat, 2-Hydroxyethylacrylat, 2-Hydroxypropylmethacrylat, 1-Methyl-2-hydroxyethylmethacrylat, 2-Hydroxypropylacrylat, 1-Methyl-2-hydroxyethylacrylat, 2-Hydroxybutylmethacrylat, 2-Hydroxybutylacrylat oder Gemische davon ist.

**20.** Verfahren nach Anspruch 19, dadurch gekennzeichnet, daß das Hydroxy-$(C_2-C_6)$-alkylmethacrylatmonomere ein Gemisch von 2-Hydroxypropylmethacrylat und 1-Methyl-2-hydroxyethylmethacrylat ist.

**21.** Verfahren nach irgendeinem der Ansprüche 18 bis 20, dadurch gekennzeichnet, daß das Monomere (a) 0 bis 20 Gew.-% Monomeres ist, (b) von 45 bis 85 Gew.-% Monomeres ist, (c) von 5 bis 35 Gew.-% ist und das Hydroxy-$(C_2-C_6)$-alkylmethacrylatmonomere von 4 bis 20 Gew.-% eines Gemisches von 2-Hydroxypropylmethacrylat und 1-Methyl-2-hydroxyethylmethacrylat ist.

**22.** Verfahren nach Anspruch 21, dadurch gekennzeichnet, daß das Monomere (a) null bis 10 Gew.-% Monomeres ist, (b) von 50 bis 70 Gew.-% Monomeres ist, (c) von 20 bis 35 Gew.-% ist und das Hydroxy-$(C_2-C_6)$-alkylmethacrylatmonomere von 5 bis 15 Gew.-% eines Gemisches von 2-Hydroxypropylmethacrylat und 1-Methyl-2-hydroxyethylmethacrylat ist.

**23.** Verfahren nach Anspruch 15 oder 16, dadurch gekennzeichnet, daß das Monomere von 60 bis 100 Gew.-% eines Monomeren umfaßt, ausgewählt aus $(C_1-C_{24})$-Alkylmethacrylaten und $(C_1-C_{24})$-Alkylacrylaten und von null bis 40 Gew.-% eines monoethylenisch ungesättigten Monomeren.

**24.** Verfahren nach Anspruch 23, dadurch gekennzeichnet, daß die $(C_1-C_{24})$-Alkylmethacrylat- und $(C_1-C_{24})$ -Alkylacrylatmonomeren umfassen:

(a) von 0 bis 40 Gew.-% eines Alkylmethacrylats oder Alkylacrylats, worin die Alkylgruppe 1 bis 6 Kohlenstoffatome enthält oder ein Gemisch davon,
(b) von 30 bis 90 Gew.-% eines Alkylmethacrylats oder Alkylacrylats, worin die Alkylgruppe 7 bis 15 Kohlenstoffatome enthält oder ein Gemisch davon,
(c) von 0 bis 40 Gew.-% eines Alkylmethacrylats oder Alkylacrylats, worin die Alkylgruppe 16 bis 24 Kohlenstoffatome enthält oder ein Gemisch davon;

und das monoethylenisch ungesättigte Monomere ein vinylaromatisches Monomeres, ein substituiertes Ethylenmonomeres, ein Monomeres mit einem stickstoffhaltigen Ring oder Gemische davon umfaßt.

**25.** Verfahren nach irgendeinem der Ansprüche 11 bis 24, dadurch gekennzeichnet, daß das Polymere ein Gewichtsdurchschnitts-Molekulargewicht von 20.000 bis 1.000.000 und einen Polydispersitätsindex von 2 bis 6 hat, wenn der Polydispersitätsindex ausgedrückt wird als das Verhältnis vom Gewichtsdurchschnitts-Molekulargewicht zum Zahlendurchschnitts-Molekulargewicht.

**26.** Verfahren nach Anspruch 11 bis 25, dadurch gekennzeichnet, daß ein Verdünnungsmittel im Reaktionsgefäß während der Polymerisation vorliegt.

**27.** Verfahren nach Anspruch 26, dadurch gekennzeichnet, daß das Verdünnungsmittel ausgewählt ist aus der Gruppe bestehend aus aliphatischen Kohlenwasserstoffen, aromatischen Kohlenwasserstoffen, chlorierten Kohlenwasserstoffen, Estern, Ölen auf Erdölbasis und Ölen auf Synthesebasis.

**28.** Verfahren anch Anspruch 27, dadurch gekennzeichnet, daß das Öl auf Synthesebasis ausgewählt aus Poly(alkylmethacrylat), Olefincopolymeren und hydrierten Styrol-Diencopolymer-Schmierölzusätzen ist.

**29.** Verfahren nach Anspruch 28, dadurch gekennzeichnet, daß das Olefincopolymere ein Poly(ethylen-propylen)-Schmierölzusatz ist.

**30.** Verfahren nach Anspruch 28 oder 29, dadurch gekennzeichnet, daß das hydrierte Styrol-diencopolymere ein hydrierter Poly(styrol-butadien)-Schmierölzusatz ist.

**Revendications**

**1.** Procédé de polymérisation, qui consiste à introduire un monomère et un amorceur dans un réacteur dans les conditions d'une polymérisation, en utilisant un profil de charge de monomère et un profil de charge d'amorceur, dans lequel l'un des profils de charge est présélectionné ; les profils de charge sont tels que le rapport de la concentration du monomère à la concentration de l'amorceur est déterminé en fonction de la relation cinétique de polymérisation entre un degré de polymérisation sélectionné du polymère et la concentration du monomère, la concentration de l'amorceur et la température de réaction ; et le rapport de la concentration du monomère à la concentration de l'amorceur, dans la relation cinétique, est modifié par un facteur de rendement de polymérisation, qui est exprimé en fonction de variables de réaction qui affectent l'efficacité de l'amorceur, pour obtenir un degré de polymérisation approximativement constant pendant la polymérisation.

**2.** Procédé selon la revendication 1, dans lequel l'amorceur est introduit dans le réacteur par utilisation d'un profil de charge d'amorceur sélectionné, et le monomère est introduit dans le réacteur par utilisation d'un profil de charge de monomère qui est calculé à partir d'une relation cinétique de polymérisation entre un degré de polymérisation sélectionné et la concentration du monomère, la concentration de l'amorceur, la température de réaction et le facteur de rendement de polymérisation.

**3.** Procédé selon la revendication 1, dans lequel le monomère est introduit dans le réacteur par utilisation d'un profil de charge de monomère sélectionné et l'amorceur est introduit dans le réacteur par utilisation d'un profil de charge d'amorceur qui est calculé à partir d'une relation cinétique de polymérisation entre un degré de polymérisation sélectionné et la concentration du monomère, la concentration de l'amorceur, la température de réaction et le facteur de rendement de polymérisation.

**4.** Procédé selon la revendication 1, dans lequel le facteur de rendement de polymérisation est inférieur à 1 pour au moins une partie de la polymérisation, et est obtenu par voie empirique.

**5.** Procédé selon la revendication 4, dans lequel le facteur de rendement de polymérisation est exprimé en fonction du degré de conversion du monomère :

$$f_p = \{a + b_{11}C + b_{12}C^2\}$$

où $f_p$ est le facteur de rendement de polymérisation, C est le degré de conversion du monomère, et a, $b_{11}$ et $b_{12}$ sont des constantes, et $f_p$ vaut de 1 à 0,01.

**6.** Procédé selon la revendication 1, dans lequel le monomère et l'amorceur qui ont été introduits dans le réacteur sont suivis sur une base continue par un moyen permettant de déterminer les quantités introduites, les quantités introduites sont comparées aux valeurs prédéterminées du profil pour le monomère introduit et l'amorceur introduit en fonction du temps, et les profils de charge du monomère et de l'amorceur sont ajustés en conséquence chaque fois que n'est pas nulle la différence entre les valeurs prédéterminées du profil pour le monomère introduit ou l'amorceur introduit, et les quantités introduites.

**7.** Procédé selon la revendication 1, dans lequel la concentration du monomère dans le réacteur est mesurée sur une base continue grâce à un moyen permettant de mesurer la concentration du monomère, et la concentration du monomère telle que mesurée est utilisée ensuite dans la relation cinétique de polymérisation entre le degré de polymérisation et la concentration du monomère, la concentration de l'amorceur, la température de réaction et le facteur de rendement de polymérisation, pour ajuster le profil de charge de l'amorceur en conséquence pendant l'opération de polymérisation.

**8.** Procédé selon la revendication 1, dans lequel une viscosité en vrac, portant sur le contenu du réacteur, est mesurée sur une base continue grâce à un moyen permettant de mesurer la viscosité, et les profils de charge du monomère et de l'amorceur sont ajustés en conséquence pendant l'opération de polymérisation, en se fondant sur l'utilisation de la viscosité en vrac dans la relation cinétique de polymérisation entre le degré de polymérisation et la concentration du monomère, la concentration de l'amorceur, la température de réaction et le facteur de rendement de polymérisation, pour satisfaire à un objectif prédéterminé relatif au degré de polymérisation.

**9.** Procédé selon l'une quelconque des revendications précédentes, qui consiste en outre à maintenir les conditions de réaction pendant un laps de temps suffisant, après introduction complète du monomère et de l'amorceur, pour que plus de 90 % du monomère soient convertis en le polymère.

**10.** Procédé selon l'une quelconque des revendications précédentes, dans lequel le polymère a un indice de polydispersité de 1,5 à 6, quand l'indice de polydispersité est exprimé par le rapport de la masse moléculaire moyenne en masse à la masse moléculaire moyenne en nombre.

**11.** Procédé de polymérisation selon la revendication 1, qui consiste :

(a) à sélectionner un degré de polymérisation pour le polymère souhaité ;

(b) à sélectionner un profil de charge de monomère ;

(c) à calculer un profil de charge d'amorceur à partir de la relation cinétique de polymérisation entre le degré sélectionné de polymérisation et la concentration du monomère, la concentration de l'amorceur, la température de réaction et le facteur de rendement de polymérisation, où le facteur de rendement de polymérisation est exprimé en fonction de variables de réaction qui affectent l'efficacité de l'amorceur, est obtenu par voie empirique et est inférieur à 1 pour au moins une partie de la polymérisation ;

(d) à introduire le monomère dans le réacteur dans les conditions d'une polymérisation, en fonction du profil de charge de monomère sélectionné de l'étape (b) ;

(e) à introduire l'amorceur dans le réacteur en fonction du profil de charge d'amorceur calculé dans l'étape (c) ; et

(f) à maintenir les conditions de réaction pendant un laps de temps suffisant, après introduction complète du monomère et de l'amorceur, pour leur permettre de réagir ;

dans le but d'obtenir un degré approximativement constant de polymérisation pour le polymère pendant l'opération de polymérisation.

**12.** Procédé de polymérisation selon la revendication 11, dans lequel plus de 90 % du monomère sont convertis en polymère.

**13.** Procédé de polymérisation selon la revendication 11 ou 12, dans lequel le polymère a un indice de polydispersité de 1,5 à 6, l'indice de polydispersité étant exprimé par le rapport de la masse moléculaire moyenne en masse à la masse moléculaire moyenne en nombre.

**14.** Procédé de polymérisation selon l'une quelconque des revendications 11 à 13, dans lequel le facteur de rendement de polymérisation est exprimé en fonction du degré de conversion du monomère :

$$f_p = \{a + b_{11}C + b_{12}C^2\}$$

où $f_p$ est le facteur de rendement de polymérisation, C est le degré de conversion du monomère, et a, $b_{11}$ et $b_{12}$ sont des constantes résultant d'une analyse par régression, et $f_p$ vaut de 1 à 0,01.

**15.** Procédé selon l'une quelconque des revendications 11 à 14, dans lequel le monomère est introduit en plusieurs stades comprenant :

(a) un premier stade, dans lequel de 5 à 20 % en poids de la totalité du monomère sont introduits à un débit présentant une croissance approximativement constante, sur un laps de temps de 10 à 40 minutes ;

(b) un deuxième stade dans lequel de 30 à 70 % en poids de la totalité du monomère sont introduits à un débit approximativement constant, pendant un laps de temps de 10 à 60 minutes ; et

(c) un stade final, dans lequel le reste du monomère est introduit à un débit présentant une décroissance approximativement constante, sur un laps de temps de 20 à 120 minutes.

**16.** Procédé selon la revendication 15, dans lequel le monomère introduit dans le premier stade (a) représente de 5 à 10 % en poids de la totalité du monomère et est introduit en un laps de temps de 10 à 15 minutes, le monomère introduit dans le deuxième stade (b) représente de 40 à 60 % en poids de la totalité du monomère et est introduit sur un laps de temps de 20 à 40 minutes, et le monomère introduit dans le stade final (c) est introduit sur un laps de temps de 45 à 60 minutes.

**17.** Procédé selon l'une quelconque des revendications 11 à 16, dans lequel le monomère comprend de 70 à 98 % en poids d'un monomère choisi dans l'ensemble comprenant les méthacrylates d'alkyle en $C_1$-$C_{24}$ et les acrylates d'alkyle en $C_1$-$C_{24}$ et de 2 à 30 % en poids d'un monomère choisi dans l'ensemble comprenant les méthacrylates d'hydroxyalkyle en $C_2$-$C_6$ et les acrylates d'hydroxyalkyle en $C_2$-$C_6$, où le nombre d'atomes de carbone des groupes alkyle est en moyenne de 7 à 14.

**18.** Procédé selon la revendication 17, dans lequel le méthacrylate d'alkyle en $C_1$-$C_{24}$ et l'acrylate d'alkyle en $C_1$-$C_{24}$

comprennent :

> (a) de 0 à 40 % en poids d'un méthacrylate d'alkyle ou d'un acrylate d'alkyle dans lequel le groupe alkyle contient de 1 à 6 atomes de carbone, ou leurs mélanges,
> (b) de 30 à 90 % en poids d'un méthacrylate d'alkyle ou d'un acrylate d'alkyle dans lequel le groupe alkyle contient de 7 à 15 atomes de carbone, ou leurs mélanges,
> (c) de 0 à 40 % en poids d'un méthacrylate d'alkyle ou d'un acrylate d'alkyle dont le groupe alkyle contient de 16 à 24 atomes de carbone, ou leurs mélanges.

**19.** Procédé selon la revendication 18, dans lequel le monomère (a) est le méthacrylate de méthyle, le méthacrylate de butyle, le méthacrylate d'isobutyle ou leurs mélanges, le monomère (b) est le méthacrylate de 2-éthylhexyle, le méthacrylate d'isodécyle, le méthacrylate de dodécylpentadécyle, le méthacrylate de laurylmyristyle ou leurs mélanges, le monomère (c) est le méthacrylate de cétylstéaryle, le méthacrylate de cétyléicosyle ou leurs mélanges, et dans lequel le méthacrylate d'hydroxyalkyle en $C_2$-$C_6$ et l'acrylate d'hydroxyalkyle en $C_2$-$C_6$ monomère est le méthacrylate de 2-hydroxyéthyle, l'acrylate de 2-hydroxyéthyle, le méthacrylate de 2-hydroxypropyle, le méthacrylate de 1-méthyl-2-hydroxyéthyle, l'acrylate de 2-hydroxypropyle, l'acrylate de 1-méthyl-2-hydroxyéthyle, le méthacrylate de 2-hydroxybutyle, l'acrylate de 2-hydroxybutyle ou leurs mélanges.

**20.** Procédé selon la revendication 19, dans lequel le méthacrylate d'hydroxyalkyle en $C_2$-$C_6$ monomère est un mélange de méthacrylate de 2-hydroxypropyle et de méthacrylate de 1-méthyl-2-hydroxyéthyle.

**21.** Procédé selon l'une quelconque des revendications 18 à 20, dans lequel le monomère (a) représente de 0 à 20 % en poids de monomère, (b) représente de 45 à 85 % en poids de monomère, (c) représente de 5 à 35 % en poids, et le méthacrylate d'hydroxyalkyle en $C_2$-$C_6$ monomère représente de 4 à 20 % en poids d'un mélange de méthacrylate de 2-hydroxypropyle et de méthacrylate de 1-méthyl-2-hydroxyéthyle.

**22.** Procédé selon la revendication 21, dans lequel le monomère (a) représente de 0 à 10 % en poids de monomère, (b) représente de 50 à 70 % en poids de monomère, (c) représente de 20 à 35 % en poids, et le méthacrylate d'hydroxyalkyle en $C_2$-$C_6$ monomère représente de 5 à 15 % en poids d'un mélange de méthacrylate de 2-hydroxypropyle et de méthacrylate de 1-méthyl-2-hydroxyéthyle.

**23.** Procédé selon la revendication 15 ou 16, dans lequel le monomère comprend de 60 à 100 % en poids d'un monomère choisi parmi les méthacrylates d'alkyle en $C_1$-$C_{24}$ et les acrylates d'alkyle en $C_1$-$C_{24}$, et de 0 à 40 % en poids d'un monomère à insaturation monoéthylénique.

**24.** Procédé selon la revendication 23, dans lequel le méthacrylate d'alkyle en $C_1$-$C_{24}$ et l'acrylate d'alkyle en $C_1$-$C_{24}$ monomère comprennent :

> (a) de 0 à 40 % en poids d'un méthacrylate d'alkyle ou d'un acrylate d'alkyle dans lequel le groupe alkyle contient de 1 à 6 atomes de carbone, ou leurs mélanges,
> (b) de 30 à 90 % en poids d'un méthacrylate d'alkyle ou d'un acrylate d'alkyle dans lequel le groupe alkyle contient de 7 à 15 atomes de carbone, ou leurs mélanges,
> (c) de 0 à 40 % en poids d'un méthacrylate d'alkyle ou d'un acrylate d'alkyle dans lequel le groupe alkyle contient de 16 à 24 atomes de carbone, ou leurs mélanges,

> et le monomère à insaturation monoéthylénique comprend un monomère vinylaromatique, un éthylène substitué monomère, un monomère ayant un noyau azoté, ou leurs mélanges.

**25.** Procédé selon l'une quelconque des revendications 11 à 24, dans lequel le polymère a une masse moléculaire moyenne en masse de 20 000 à 1 000 000 et un indice de polydispersité de 2 à 6, l'indice de polydispersité étant exprimé par le rapport de la masse moléculaire moyenne en masse à la masse moléculaire moyenne en nombre.

**26.** Procédé selon les revendications 11 à 25, dans lequel un diluant est présent dans le réacteur pendant la polymérisation.

**27.** Procédé selon la revendication 26, dans lequel le diluant est choisi dans l'ensemble comprenant les hydrocarbures aliphatiques, les hydrocarbures aromatiques, les hydrocarbures chlorés, les esters, les huiles de base pétrolières et les huiles de base synthétiques.

**28.** Procédé selon la revendication 27, dans lequel l'huile de base synthétique est choisie parmi les additifs pour huiles lubrifiantes du type poly(méthacrylate d'alkyle), copolymère oléfinique et copolymère styrènediène hydrogéné.

**29.** Procédé selon la revendication 28, dans lequel le copolymère oléfinique est un additif pour huile lubrifiante à base de poly(éthylénepropylène).

**30.** Procédé selon la revendication 28 ou 29, dans lequel le copolymère styrène-diène hydrogéné est un additif pour huile lubrifiante du type poly(styrène-butadiène) hydrogéné.